# EUROPÄISCHE PATENTSCHRIFT

(11) **EP 2 042 745 B1**
(45) Veröffentlichungstag und Bekanntmachung des Hinweises auf die Patenterteilung: **08.04.2015**
(21) Anmeldenummer: 08015479.2
(22) Anmeldetag: 02.09.2008
(51) Int. Cl.: F15B 7/00, F15B 21/14, F15B 1/02

(54) **Hydraulisches Antriebssystem mit Energierückgewinnung**
Hydraulic drive system with energy recuperation
Système d'entraînement hydraulique avec récupération d'énergie

(30) Priorität: 28.09.2007 DE 102007046696
(43) Veröffentlichungstag der Anmeldung: 01.04.2009
(60) Teilanmeldung: 12004594.3
(73) Patentinhaber: Liebherr-Werk Nenzing GmbH, 6710 Nenzing (AT)
(72) Erfinder: Schneider, Klaus, 88145 Hergatz (DE); Kräutler, Wilhelm, 6842 Koblach (AT)
(74) Vertreter: Laufhütte, Dieter

(56) Entgegenhaltungen:
- DE-A1- 2 817 405
- DE-A1- 3 247 335
- DE-A1-102005 061 990
- US-A1- 2008 081 724

## Beschreibung

Die vorliegende Erfindung betrifft ein hydraulisches Antriebssystem zum Antrieb einer Vorrichtung, mit einer Antriebseinheit, welche die Vorrichtung über einen primären Hydraulikkreislauf aus einer ersten und einer zweiten hydraulischen Verdrängermaschine antreiben kann, sowie mit einer dritten hydraulischen Verdrängermaschine, welche zur Übertragung mechanischer Energie mit der Vorrichtung verbindbar oder verbunden ist, und einem Hochdruckspeicher, welcher hydraulisch mit der dritten Verdrängermaschine verbunden oder verbindbar ist. Insbesondere betrifft die vorliegende Erfindung dabei ein hydraulisches Antriebssystem, welches in einem Kran zum Einsatz kommt, insbesondere zum Antrieb einer Winde. Weiterhin betrifft die vorliegende Erfindung ein hydraulisches Antriebssystem, welches in einem mobilen Arbeitsgerät, insbesondere einem Reachstacker oder einem Radlader, zum Einsatz kommt, insbesondere als Fahrantrieb.

Solche hydraulischen Antriebssysteme weisen dabei üblicherweise eine primäre Antriebseinheit, z. B. einen Verbrennungsmotor oder einen Elektromotor auf, welcher eine oder mehrere Hydraulikpumpen antreibt, um hydraulische Energie für den Antrieb der Vorrichtung bereitzustellen. Zur Leistungssteigerung solcher Systeme ist es zunächst möglich, die Antriebseinheit größer zu dimensionieren, um damit auch mehr hydraulische Energie zur Verfügung stellen zu können. Mit der Größe der primären Antriebseinheit steigen jedoch auch die Kosten, der Bauraum und der Energieverbrauch des Systems.

Aus diesem Grund werden zunehmend hydraulische Energiespeicher eingesetzt, welche z. B. in Abbremsphasen aufgeladen werden und in Beschleunigungsphasen die in ihnen gespeicherte hydraulische Energie dem Antriebssystem zur Verfügung stellen. So kann die Antriebseinheit selbst kleiner dimensioniert werden, da sie bei Belastungsspitzen durch den Hochdruckspeicher unterstützt wird. Bei bekannten hydraulischen Antriebssystemen mit einem solchen Hochdruckspeicher lassen sich jedoch keine zufriedenstellenden Wirkungsgrade für die Energiespeicherung bzw. Energieabgabe erreichen. Zudem ist die Ansteuerung oftmals kompliziert.Ein hydraulisches Antriebssystem nach dem Oberbegriff von Anspruch 1 ist aus DE 10 2005 061 990 A1 bekannt.

Aufgabe der vorliegenden Erfindung ist es daher, ein hydraulisches Antriebssystem zur Verfügung zu stellen, welches eine effektive Energiespeicherung und eine einfache Ansteuerung ermöglicht.

Erfindungsgemäß wird diese Aufgabe von einem hydraulischen Antriebssystem zum Antrieb einer Vorrichtung gemäß Anspruch 1 gelöst. Ein solches hydraulisches Antriebssystem umfasst eine Antriebseinheit, welche die Vorrichtung über einen primären Hydraulikkreislauf aus einer ersten und einer zweiten hydraulischen Verdrängermaschine antreiben kann, sowie eine dritte hydraulische Verdrängermaschine, welche zur Übertragung mechanischer Energie mit der Vorrichtung verbindbar oder verbunden ist, und einem Hochdruckspeicher, welcher hydraulisch mit der dritten Verdrängermaschine verbunden oder verbindbar ist. Erfindungsgemäß ist dabei der Hochdruckspeicher durch eine hydraulische Verdrängermaschine aufladbar ist, welche mit der Antriebseinheit zur Übertragung mechanischer Energie verbunden oder verbindbar ist.

Da der Hochdruckspeicher über eine hydraulische Verdrängermaschine aufladbar ist, welche mit der Antriebseinheit verbunden oder verbindbar ist, kann in Phasen, in welchen die von der Antriebseinheit zur Verfügung gestellte Antriebsleistung nicht oder nicht komplett zum Antrieb der Vorrichtung benötigt wird, der Hochdruckspeicher mit einem hervorragenden Wirkungsgrad aufgeladen werden, da eine direkte Umsetzung der von der Antriebseinheit gelieferten mechanischen Energie in hydraulische Energie durch die hydraulische Verdrängermaschine erfolgt.

Zudem ist es mit der erfindungsgemäßen Anordnung möglich, den Hochdruckspeicher über die Antriebseinheit aufzuladen, ohne die Vorrichtung zu bewegen, während bei bekannten Systemen der Hochdruckspeicher lediglich dann aufgeladen werden kann, wenn auch die Vorrichtung bewegt wird. Hierdurch ergibt sich eine erheblich verbesserte Flexibilität im Speichermanagement des erfindungsgemäßen hydraulischen Antriebssystems, da der Hochdruckspeicher auch in Phasen, in welchen die Vorrichtung stillsteht und damit weder die zweite noch die dritte hydraulische Verdrängermaschine bewegt werden, der Hochdruckspeicher über eine hydraulische Verdängermaschine, welche mit der Antriebseinheit zur Übertragung mechanischer Energie verbunden oder verbindbar ist, aufgeladen werden kann. Neben dem optimalen Wirkungsgrad durch die direkte Umsetzung der mechanischen Energie der Antriebseinheit in hydraulische Energie, welche sodann gespeichert wird, ergibt sich damit auch ein verbessertes Speichermanagement.

Insbesondere ist durch die erfindungsgemäße Anordnung dabei möglich, die Antriebseinheit, z. B. einen Dieselmotor, immer auf einem optimalen Betriebspunkt zu betreiben und die im primären Hydraulikkreislauf nicht benötigte Energie im Hochdruckspeicher zu speichern. Während Lastspitzen kann diese Energie dann wieder an das Antriebssystem zurückgegeben werden, so dass das Gesamtsystem eine hohe Ausgangsleistung und bei relativ klein dimensionierter Antriebseinheit aufweist. Auch läßt sich so der Energieverbrauch der Antriebseinheit optimieren, ebenso wie die Lebensdauer, da bei einem optimalen Betriebspunkt gearbeitet werden kann.

Weiterhin können erfindungsgemäß die erste hydraulische Verdrängermaschine als Hydraulikpumpe und die zweite hydraulische Verdrängermaschine als ein Hydraulikmotor arbeiten, so dass die erste hydraulische Verdrängermaschine die zweite hydraulische Verdrängermaschine antreibt und einen primären Hydraulikkreislauf bildet. Über die dritte hydraulische Verdrängermaschine kann dann eine Energierückgewinnung erfolgen, welche unabhängig vom primären Hydraulikkreislauf ist.
Dies ermöglicht eine besonders einfache Ansteuerung des erfindungsgemäßen Systems erlaubt. Hierbei gibt vorteilhafterweise der durch den primären hydraulischen Kreislauf aus erster hydraulischer Verdrängermaschine und zweiter hydraulischer Verdrängermaschine fließende Volumenstrom und gegebenenfalls die Einstellung dieser Verdrängermaschinen die Drehzahl und die Position der Vorrichtung vor. Die dritte hydraulische Verdrängermaschine kann dann, je nach Lastsituation, entweder zum Speichern von hydraulischer Energie oder zur Unterstützung des Antriebssystems aus erster und zweiter hydraulischer Verdrängermaschine herangezogen werden.

Hierdurch ergibt sich die Möglichkeit, den primären Antrieb primär zu regeln, während der sekundäre Antrieb aus Hochdruckspeicher und dritter hydraulischer Verdrängermaschine sekundär geregelt wird. Hierdurch lassen sich die Probleme, welche eine praxistaugliche Umsetzung der energetisch eigentlich vorteilhafteren Sekundärregelung verhindert haben, effektiv umgehen. Bisherige sekundär geregelten Antrieben waren regelungstechnisch schwer zu beherrschen, da Momentendifferenzen sofort zu einer Bewegung der Vorrichtung führten. Da in der Praxis durch Toleranzen in den Hydraulikkomponenten, Hysterise und ähnlichen Störeinflüsse ein 100% ideales Drehmoment nicht erzeugt werden kann, ergeben sich so aus regelungstechnischer Sicht durch die erfindungsgemäße Kombination eines primär geregelten und eines sekundär geregelten Antriebskreislaufs enorme Vorteile. Im Gegensatz zu einem einfachen sekundär geregelten Antrieb ist die erfindungsgemäße Variante sehr robust, da der primäre Antrieb die gewünschte Drehzahl oder Position vorgibt, und so ungewollte Bewegungen der Vorrichtung verhindert, auch wenn der sekundäre Antrieb aus Hochdruckspeicher und dritter hydraulischer Verdrängermaschine das vorausberechnete Wunschmoment nicht exakt verursacht. Insbesondere aus sicherheitstechnischer Sicht ermöglicht damit das erfindungsgemäße System eine erhebliche Verbesserung, und kombiniert diese mit den energetischen Vorteilen eines sekundär geregelten Antriebs.

Vorteilhafterweise ist dabei der Hochdruckspeicher durch die erste hydraulische Verdrängermaschine aufladbar, welche in dem erfindungsgemäßen hydraulischen Antriebssystem ohnehin vorhanden und mit der Antriebseinheit verbindbar oder verbunden ist, um die hydraulische Energie zum Antrieb der zweiten hydraulischen Verdrängermaschine bereitzustellen. In Phasen, in welchen die von der ersten hydraulischen Verdrängermaschine zur Verfügung gestellte hydraulische Energie von der zweiten hydraulischen Verdrängermaschine nicht oder nicht vollständig genutzt wird, kann diese hydraulische Energie erfindungsgemäß im Hochdruckspeicher gespeichert werden und steht dann in Betriebsphasen mit hoher Last zur Unterstützung der Antriebseinheit zur Verfügung.

Vorteilhafterweise ist der Hochdruckspeicher dabei über ein Ventil mit der ersten hydraulischen Verdrängermaschine verbindbar. In Phasen, in welchen der Hochdruckspeicher über die Antriebseinheit und die erste hydraulische Verdrängermaschine aufgeladen werden soll, wird der Hochdruckspeicher über dieses Ventil mit dem primären Hydraulikkreislauf verbunden. In Phasen, in welchen die im Hochdruckspeicher gespeicherte hydraulische Energie dagegen dazu genutzt wird, um die Vorrichtung anzutreiben, wird der Hochdruckspeicher vom primären Hydraulikkreislauf getrennt und treibt die Vorrichtung über die dritte hydraulische Verdrängermaschine an. Das Ventil, über welches der Hochdruckspeicher mit der ersten hydraulischen Verdrängermaschine verbindbar ist, hat damit vorteilhafterweise eine Schaltstellung, in welcher der Hochdruckspeicher von der ersten hydraulischen Verdrängermaschine getrennt ist und eine zweite Schaltstellung, in welcher der Hochdruckspeicher mit der ersten hydraulischen Verdrängermaschine verbunden ist.

In weiterhin vorteilhafter Weise ist die Verbindung dabei drosselbar. Über ein solches Stromregelventil kann das erfindungsgemäße Speichermanagement effektiv angesteuert werden.

Alternativ kann erfindungsgemäß eine vierte hydraulische Verdrängermaschine vorgesehen sein, über welche der Hochdruckspeicher aufladbar ist. Hierdurch ergibt sich zusätzlich zu den bereits oben erwähnten Vorteilen des effektiven und flexiblen Speichermanagements eine flexible Ausgestaltung des übrigen hydraulischen Systems, da der primäre Hydraulikkreislauf aus erster und zweiter hydraulischer Verdrängermaschine unabhängig von dem zweiten Hydraulikkreislauf aus vierter hydraulischer Verdrängermaschine, Hochdruckspeicher und dritter hydraulischer Verdrängermaschine betrieben werden kann.

Eine solche Ausführung der Erfindung umfaßt damit eine Antriebseinheit, eine erste und eine vierte hydraulische Verdrängermaschine, mit welchen die Antriebseinheit zur Übertragung mechanischer Energie verbindbar oder verbunden ist, und eine zweite und eine dritte hydraulische Verdrängermaschine, welche zur Übertragung mechanischer Energie mit der Vorrichtung verbindbar oder verbunden sind. Dabei ist die erste hydraulische Verdrängermaschine hydraulisch mit der zweiten hydraulischen Verdrängermaschine verbunden oder verbindbar. Weiterhin ist erfindungsgemäß ein Hochdruckspeicher vorgesehen, welcher hydraulisch mit der vierten und der dritten hydraulischen Verdrängermaschine verbunden oder verbindbar ist.

Hierdurch ergibt sich zunächst ein primärer Hydraulikkreislauf aus erster und zweiter hydraulischer Verdrängermaschine, über welchen die Vorrichtung hydraulisch angetrieben werden kann. Die vierte und die dritte hydraulische Verdrängermaschine dienen dagegen dem effektiven Speichermanagement des Hochdruckspeichers. Dadurch, dass die vierte hydraulische Verdrängermaschine mit der primären Antriebseinheit verbunden oder verbindbar ist und gleichzeitig die dritte hydraulische Verdrängermaschine mit der Vorrichtung verbindbar oder verbunden ist, ergeben sich dabei sowohl beim Aufladen des Hochdruckspeichers als auch bei der Energierückgewinnung optimale Wirkungsgrade und eine gute Ausnutzung der von der primären Antriebseinheit zur Verfügung gestellten Antriebsleistung. Zudem ergibt sich durch die Verwendung der vier Verdrängermaschinen eine optimale Steuerbarkeit des Systems.

Weiterhin vorteilhafterweise ist erfindungsgemäß der Hochdruckspeicher über die dritte hydraulische Verdrängermaschine aufladbar, indem diese als Hydraulikpumpe arbeitet. Hierdurch ist es möglich, in Phasen, in welchen die Vorrichtung abgebremst werden soll, die dabei von der Vorrichtung an das Antriebssystem übertragene mechanische Energie zu speichern. Auch hier ist ein hervorragender Wirkungsgrad gegeben, da die mechanische Energie aus der Vorrichtung direkt über die dritte hydraulische Verdrängermaschine in hydraulische Energie umgewandelt und dem Hochdruckspeicher zugeführt. wird. Auch hierdurch läßt sich der Energieverbrauch des Systems reduzieren. Zudem kann mit einer kleineren Antriebseinheit gearbeitet werden, da die im Hochdruckspeicher gespeicherte hydraulische Energie während Beschleunigungsphasen zur Unterstützung des Systems herangezogen werden kann.

Besonders vorteilhafterweise ist der Hochdruckspeicher dabei je nach Betriebszustand entweder über die erste bzw. vierte hydraulische Verdrängermaschine oder über die dritte hydraulische Verdrängermaschine aufladbar, so dass sich, egal ob der Hochdruckspeicher über die Antriebseinheit oder die Vorrichtung aufgeladen wird, jeweils hervorragende Wirkungsgrade einstellen.

Weiterhin vorteilhafterweise ist die zur Aufladung verwendete hydraulische Verdrängermaschine mit einem Hydraulikreservoir verbunden oder verbindbar. Bei der Energiespeicherung kann so Hydraulikflüssigkeit aus dem Hydraulikreservoir abgepumpt und in den Hochdruckspeicher gepumpt werden. Arbeiten die jeweilige hydraulische Verdrängermaschine dagegen als Hydraulikmotor, kann die Flüssigkeit über die hydraulische Verdrängermaschine in das Hydraulikreservoir abfließen.

Vorteilhafterweise steht dabei erfindungsgemäß die dritte und/oder die vierte hydraulische Verdrängermaschine mit einem Hydraulikreservoir in Verbindung. Wird eine vierte hydraulische Verdrängermaschine eingesetzt, ergibt sich vorteilhafterweise ein offner sekundärer Hydraulikkreislauf aus vierter hydraulischer Verdrängermaschine, Hochdruckspeicher und dritter hydraulischer Verdrängermaschine.

Ist der Hochdruckspeicher dagegen über die erste hydraulische Verdrängermaschine aufladbar, hängt die Ausgestaltung davon ab, ob der primäre Hydraulikkreislauf offen oder geschlossen ausgestaltet ist. Bei einem offenen primären Hydraulikkreislauf steht die erste hydraulische Verdrängermaschine mit dem Hydraulikreservoir in Verbindung und kann, wenn der Hochdruckspeicher mit dem Ausgang der als Hydraulikpumpe arbeitenden ersten hydraulischen Verdrängermaschine verbunden ist, diesen aufladen. Bei einem geschlossenen primären Hydraulikkreislauf wird die Hydraulikflüssigkeit dagegen vorteilhafterweise über die ohnehin vorhandene Leck-ölkompensation bereitgestellt, wozu das Hydraulikreservoir über eine Speisepumpe und ein Rückschlagventil mit dem Eingang der als Hydraulikpumpe arbeitenden ersten hydraulischen Verdrängermaschine verbunden ist, welche hierdurch mit Hydraulikfluid, welches Minimaldruck aufweist, versorgt wird.

Weiterhin vorteilhafterweise arbeitet die dritte hydraulische Verdrängermaschine erfindungsgemäß als Hydraulikmotor und wird dabei über den Hochdruckspeicher angetrieben. Hierdurch ist es möglich, in Phasen hoher Belastung die im Hochdruckspeicher gespeicherte hydraulische Energie dem Antriebssystem zurückzugeben und die Vorrichtung anzutreiben. Dabei ergibt sich wieder ein hervorragender Wirkungsgrad, da die hydraulische Energie direkt über die dritte hydraulische Verdrängermaschine in mechanische Energie umgesetzt wird, welche dann die Vorrichtung antreibt. Durch die Unterstützung des primären Antriebs durch die dritte hydraulische Verdrängermaschine kann die Antriebseinheit kleiner dimensioniert werden, da Lastspitzen durch die im Hochdruckspeicher gespeicherte Energie abgefedert werden können.

Weiterhin vorteilhafterweise kann die erste und/oder vierte hydraulische Verdrängermaschine als Hydraulikmotor arbeiten und über den Hochdruckspeicher angetrieben werden. Hierdurch ist es möglich, Energie auch weiteren, von der Antriebseinheit parallel angetriebenen Verbrauchern zur Verfügung zu stellen, wobei sich auch hier wieder ein guter Wirkungsgrad ergibt.

Weiterhin vorteilhafterweise kann die erste hydraulische Verdrängermaschine auch als Hydromotor und die zweite hydraulische Verdrängermaschine auch als Hydraulikpumpe arbeiten, so dass die zweite Verdrängermaschine die erste hydraulische Verdrängermaschine antreibt. Hierdurch ist es möglich, z. B. in Abbremsphasen der Vorrichtung über den Kreislauf aus zweiter und erster hydraulischer Verdrängermaschine Energie an weitere Verbraucher zurückzuführen, welche parallel von der Antriebseinheit angetrieben werden.

Erfindungsgemäß bilden die erste und zweite hydraulische Verdrängermaschine vorteilhafterweise einen geschlossenen hydraulischen Kreislauf. Ein solcher geschlossener Hydraulikkreislauf aus erster und zweiter hydraulischer Verdrängermaschine zum Antrieb der Vorrichtung ist dabei für viele Anwendungen von großem Vorteil, verhindert aber bei bisher bekannten hydraulischen Antriebssystemen eine effektive Energierückgewinnung bzw. ein effektives Speichermanagement.

Durch die Verwendung einer dritten hydraulischen Verdrängermaschine, welche mit dem Hochdruckspeicher in Verbindung steht, sowie die Aufladbarkeit des Hochdruckspeicher durch eine hydraulische Verdrängermaschine, welche mit der Antriebseinheit verbindbar ist, ergibt sich nun jedoch die Möglichkeit, auch bei einem geschlossenen hydraulischen Kreislauf aus erster und zweiter hydraulischer Verdrängermaschine ein effektives Speichermanagement sowie eine Energiespeicherung und Rückgewinnung mit hohem Wirkungsgraden durchzuführen.

Selbstverständlich kann die vorliegende Erfindung jedoch auch dann vorteilhaft eingesetzt werden, wenn die erste und die zweite hydraulische Verdrängermaschine einen offenen hydraulischen Kreislauf bilden.

Erfindungsgemäß sind die Wellen der zweiten und der dritten hydraulischen Verdrängermaschine zur Übertragung mechanischer Energie mit einer Antriebswelle der Vorrichtung verbindbar oder verbunden. Hierdurch kann mechanische Energie von der zweiten und der dritten hydraulischen Verdrängermaschine effektiv auf die Antriebswelle der Vorrichtung übertragen werden und umgekehrt.

Weiterhin vorteilhafterweise sind die Wellen der zweiten und der dritten hydraulischen Verdrängermaschine dabei direkt oder über ein Getriebe verbunden. Hierdurch ist die Bewegung der Wellen der zweiten und der dritten hydraulischen Verdrängermaschine fest gekoppelt, so dass sich ein einfacher Aufbau bei hohem Wirkungsgrad ergibt.

Weiterhin vorteilhafterweise sind die Wellen der zweiten und/oder der dritten hydraulischen Verdrängermaschine mit der Antriebswelle der Vorrichtung über mindestens eine Kupplung verbindbar. Hierdurch kann die erfindungsgemäße Verbindung zur Übertragung mechanischer Energie bei Bedarf effektiv hergestellt werden.

Weiterhin vorteilhafterweise ist die Abtriebswelle der Antriebseinheit mit Antriebswellen der ersten und/oder der vierten hydraulischen Verdrängermaschine zur Übertragung mechanischer Energie verbindbar oder verbunden. Hierdurch können die erste und/oder die vierte hydraulische Verdrängermaschine durch die Antriebseinheit angetrieben werden und wandeln so die von der Antriebseinheit zur Verfügung gestellte mechanische Energie in hydraulische Energie um.

Weiterhin vorteilhafterweise sind die Antriebswellen der ersten und der vierten hydraulischen Verdrängermaschine dabei über mindestens zwei Kupplungen unabhängig voneinander mit der Abtriebswelle der Antriebseinheit verbindbar. Hierdurch ist eine entsprechende Ansteuerung der ersten bzw. der vierten hydraulischen Verdrängermaschine unabhängig voneinander möglich, so dass z. B. nur die erste hydraulische Verdrängermaschine angetrieben wird oder nur die vierte hydraulische Verdrängermaschine, oder aber beide.

Weiterhin vorteilhafterweise treibt die Antriebseinheit die Antriebswellen der ersten und/oder der vierten hydraulischen Verdrängermaschine über ein Getriebe an. Dieses Getriebe liefert dann die entsprechende Übersetzung zum Antrieb der ersten und/oder der vierten hydraulischen Verdrängermaschine. Die Antriebseinheit kann dabei mit dem Getriebe über eine Kupplung verbindbar sein. Weiterhin kann das Getriebe über Kupplungen mit der ersten und/oder der vierten hydraulischen Verdrängermaschine verbindbar sein.

Weiterhin vorteilhafterweise ist erfindungsgemäß eine weitere Vorrichtung vorgesehen, welche über die Antriebseinheit angetrieben wird. Vorteilhafterweise wird die weitere Vorrichtung dabei parallel zu der ersten und/oder der vierten hydraulischen Verdrängermaschine angetrieben. Handelt es sich bei der ersten Vorrichtung z. B. um das Hubwerk eines Kranes, kann die vierte Vorrichtung z. B. das Wippwerk oder das Drehwerk des Kranes sein, so dass mehrere Stellwerke des Kranes über eine einzige Antriebseinheit angetrieben werden können.

Weiterhin vorteilhafterweise wird dabei die weitere Vorrichtung über einen Hydraulikkreislauf mit einer Hydraulikpumpe angetrieben, wobei die Hydraulikpumpe von der Antriebseinheit angetrieben wird. Die Antriebseinheit wird damit dazu eingesetzt, mehrere Hydraulikkreisläufe zum Antrieb mehrerer Vorrichtungen anzutreiben.

Weiterhin vorteilhafterweise ist dabei die weitere Vorrichtung oder die die weitere Vorrichtung antreibende Hydraulikpumpe unabhängig von der ersten und/oder der vierten hydraulischen Verdrängermaschine über mindestens eine Kupplung mit der Antriebseinheit verbindbar. So können die einzelnen Vorrichtungen unabhängig voneinander über die Antriebseinheit angetrieben werden.

Weiterhin vorteilhafterweise ist die weitere Vorrichtung oder die die weitere Vorrichtung antreibende Hydraulikpumpe dabei zur Übertragung mechanischer Energie mit der ersten und/oder vierten hydraulischen Verdrängermaschine verbindbar, insbesondere über mindestens eine Kupplung. Hierdurch ist es möglich, Energie von der ersten und/oder der vierten hydraulischen Verdrängermaschine auf die weitere Vorrichtung bzw. auf die die weitere Vorrichtung antreibende Hydraulikpumpe zu übertragen, so dass auch die weitere Vorrichtung in das Speichermanagement bzw. die Energierückgewinnung einbezogen werden kann. Allerdings ergeben sich für die weitere Vorrichtung weniger gute Wirkungsgrade, da hier hydraulische Energie zunächst in mechanische und dann wieder zurück in hydraulische Energie verwandelt werden muß. Die Verbindung von erster und/oder vierter hydraulischer Verdrängermaschine mit der weiteren Vorrichtung oder der die weitere Vorrichtung antreibenden Hydraulikpumpe kann dabei z. B. über ein gemeinsames Getriebe erfolgen, über welches alle Komponenten durch die Antriebseinheit angetrieben werden. Dieses Getriebe kann dann auch zur Energieübertragung zwischen den einzelnen Komponenten herangezogen werden.

Weiterhin vorteilhafterweise umfaßt die Antriebseinheit des erfindungsgemäßen hydraulischen Antriebssystems einen Verbrennungsmotor oder einen Elektromotor. Die Antriebseinheit stellt damit eine primäre Antriebseinheit dar, welche die einzelnen hydraulischen Verdrängermaschinen antreibt. Durch das erfindungsgemäße hydraulische Antriebssystem kann dabei die Antriebseinheit bei einem optimalen Betriebspunkt betrieben werden, da über den Hochdruckspeicher in Phasen mit geringer Belastung Energie gespeichert werden kann und in Phasen mit großer Belastung diese Energie in das System eingespeist werden kann, um den Motor der Antriebseinheit zu entlasten. Zudem ist es hierdurch möglich, bei hoher Abtriebsleistung eine Antriebseinheit mit relativ geringer Antriebsleistung einzusetzen.

Vorteilhafterweise umfaßt die erfindungsgemäße Antriebseinheit dabei einen einzigen Motor. Anstatt, wie ohne das erfindungsgemäße Hochdruckspeichermanagement nötig, zwei Motoren zu verwenden, um die Gesamtleistung des Systems zu erhöhen, reicht dabei bei der vorliegenden Erfindung ein einziger Motor aus, da Lastspitzen über den Hochdruckspeicher abgefedert werden können. Alternativ können auch mehrere parallel ein Getriebe antreibende Motoren eingesetzt werden, da die Verbindung der Antriebseinheit mit der ersten und/oder vierten hydraulischen Verdrängermaschine eine optimale Auslastung der einzelnen Motoren gewährleistet, bei der nicht benötigte Antriebsenergie gespeichert wird.

Weiterhin vorteilhafterweise weisen erfindungsgemäß die erste und/oder die zweite hydraulische Verdrängermaschine ein verstellbares Verdrängervolumen auf. Hierüber kann dann der Hydraulikkreislauf aus erster und zweiter hydraulischer Verdrängermaschine entsprechend angesteuert werden.

Weiterhin vorteilhafterweise weisen die dritte und/oder die vierte hydraulische Verdrängermaschine des erfindungsgemäßen hydraulischen Antriebssystem ein verstellbares Verdrängervolumen auf. Über die Verstellbarkeit der vierten hydraulischen Verdrängermaschine kann so die Energiespeicherung bzw. Energieabgabe über diese Verdrängermaschine gesteuert werden, über die Verstellbarkeit der dritten hydraulischen Verdrängermaschine die Energierückgewinnung aus der Vorrichtung bzw. der entsprechende zusätzliche Antrieb dieser Vorrichtung.

Weiterhin vorteilhafterweise weisen die erste und/oder die zweite hydraulische Verdrängermaschine zwei Förderrichtungen auf. Hierdurch ist es möglich, die Vorrichtung über die erste und die zweite hydraulische Verdrängermaschine in zwei Richtungen zu bewegen.

Weiterhin vorteilhafterweise weist erfindungsgemäß die dritte und/oder die vierte hydraulische Verdrängermaschine zwei Förderrichtungen auf. Hierdurch ist es möglich, die dritte und/oder die vierte hydraulische Verdrängermaschine ohne eine sonst notwendige Schaltungsanordnung sowohl als Pumpe als auch als Motor zu betreiben, indem von einer Förderrichtung in die andere Förderrichtung umgeschaltet wird.

Weiterhin vorteilhafterweise sind erfindungsgemäß zwei Vorrichtungen vorgesehen, deren Antriebssysteme jeweils über erste, zweite und dritte hydraulische Verdrängermaschinen verfügen, wobei die ersten hydraulischen Verdrängermaschinen zur Übertragung mechanischer Energie mit der Antriebseinheit verbindbar oder verbunden sind und die zweiten und dritten hydraulischen Verdrängermaschinen jeweils zur Übertragung mechanischer Energie mit den Vorrichtungen verbindbar oder verbunden sind und die ersten hydraulischen Verdrängermaschinen jeweils hydraulisch mit den zweiten hydraulischen Verdrängermaschinen verbunden oder verbindbar sind. Im wesentlichen ergeben sich so zwei parallele hydraulische Antriebssysteme aus erster, zweiter und dritter hydraulischer Verdrängermaschine. Der erfindungsgemäße Hochdruckspeicher ist dabei hydraulisch mit den dritten hydraulischen Verdrängermaschinen verbunden oder verbindbar. Hierdurch ist es möglich, eine optimale Energiespeicherung auch bei zwei Verbrauchern zu erreichen, da der Wirkungsgrad der Energierückgewinnung aus beiden Verbrauchern durch die beiden dritten hydraulischen Verdrängermaschinen optimiert ist.

Die Energiespeicherung durch die Antriebseinheit kann dabei über eine oder beide der ersten hydraulischen Verdrängermaschinen erfolgen. Hierzu ist der Hochdruckspeicher über vorteilhafterweise über ein oder mehrere Ventile mit dem Ausgang mindestens einer der ersten hydraulischen Verdrängermaschinen verbindbar.

Alternativ kann die Energiespeicherung auch über eine vierte hydraulische Verdrängermaschine erfolgen. Für die Energiespeicherung direkt aus der Antriebsleistung der Antriebseinheit muß dabei nur eine einzige vierte hydraulische Verdrängermaschine vorgesehen werden, um hier einen optimalen Wirkungsgrad zu erreichen.

Vorteilhafterweise weist das erfindungsgemäße hydraulische Antriebssystem eine Steuerung zur Ansteuerung der Speicher- und Arbeitsfunktionen des Systems auf. Diese Steuerung übernimmt dann die entsprechende Ansteuerung der Systemkomponenten, um in den einzelnen Phasen entweder Energie im Hochdruckspeicher zu speichern oder diese Energie wieder ins System zurückzuführen.

Vorteilhafterweise handelt es sich bei dem hydraulischen Antriebssystem der vorliegenden Erfindung dabei um das Antriebssystem eines Kranes. Hier kann das erfindungsgemäße Speichermanagement mit großem Gewinn eingesetzt werden.

Vorteilhafterweise ist die Vorrichtung dabei eine Winde, insbesondere eine Hubwinde. Insbesondere kann dabei beim Ablassen von Lasten die freiwerdende Energie über die dritte hydraulische Verdrängermaschine zurückgewonnen werden und beim Anheben der Lasten die Antriebseinheit über den Hochdruckspeicher unterstützt werden. Zudem ist es möglich, den Hochdruckspeicher über die erste bzw. vierte hydraulische Verdrängermaschine aufzuladen, wenn die Antriebseinheit ansonsten wenig belastet ist. Hierdurch ergibt sich sowohl ein erhebliche Leistungssteigerung, als auch massive Energieeinsparungen. So kann die Primärantriebsleistung trotz gesteigerter Abtriebsleistung reduziert werden. Ebenso können die Kühlerflächen reduziert werden, da die beim Ablassen der Last freiwerdende Energie nicht mehr vernichtet werden muß, sondern gespeichert werden kann. Zudem ergibt sich durch die abgesenkte Drehzahl des Primärantriebs ein Reduktion von Lärm- und Abgasemissionen. Weiterhin ergibt sich eine Lebensdauererhöhung für die Antriebseinheit, z. B. einen Dieselmotor, durch die gleichmäßige Belastung.

Das erfindungsgemäße hydraulische Antriebssystem kann jedoch auch zum Antrieb eines mobilen Arbeitsgerätes, insbesondere eines Reachstackers oder Radladers eingesetzt werden. Auch hier ergeben sich durch das erfindungsgemäße Speichermanagement erhebliche Energieeinsparungen und Leistungssteigerungen.

Vorteilhafterweise handelt es sich bei der Vorrichtung dabei um einen Fahrantrieb, so dass beim Bremsen Energie rückgewonnen werden kann, welche dann beim Beschleunigen zur Verfügung steht.

Die vorliegende Erfindung umfaßt weiterhin einen Kran mit einem erfindungsgemäßen hydraulischen Antriebssystem, wie es oben beschrieben wurde. Hierdurch ergeben sich die gleichen Vorteile, wie sie bereits oben beschrieben wurden.

Die vorliegende Erfindung umfaßt weiterhin ein mobiles Arbeitsgerät, insbesondere einen Reachstacker oder Radlader, mit einem hydraulischen Antriebssystem, wie es oben beschrieben wurde. Auch hierdurch ergeben sich die oben beschriebenen Vorteile.

Die vorliegende Erfindung umfaßt weiterhin ein Verfahren zum Betrieb des erfindungsgemäßen Antriebssystems, wobei der Hochdruckspeicher durch Umwandlung der Bewegungsenergie der Vorrichtung über die dritte hydraulische Verdrängermaschine aufgeladen wird und/oder der Hochdruckspeicher über eine hydraulische Verdrängermaschine aufgeladen wird, welche mit der Antriebseinheit zur Übertragung mechanischer Energie verbunden oder verbindbar ist, wenn die Leistung der Antriebseinheit nicht oder nicht vollständig für den Antrieb der Vorrichtung benötigt wird. Hierdurch läßt sich zum einen die z. B. beim Abbremsen der Vorrichtung freiwerdende Energie speichern, zum anderen kann die Antriebseinheit bei einem optimalen Betriebspunkt betrieben werden, indem überschüssige Leistung über die hydraulische Verdrängermaschine im Hochdruckspeicher gespeichert wird. Dabei ergeben sich durch die direkte Anbindung der jeweiligen hydraulischen Verdrängermaschine jeweils hervorragende Wirkungsgrade.

Erfindungsgemäß kann dabei das Aufladen des Hochdruckspeichers durch die Antriebseinheit erfolgen, während die Vorrichtung nicht bewegt wird. Dies war mit konventionellen Systemen nicht möglich, erlaubt nun aber ein wesentlich verbessertes Energiemanagement.

Vorteilhafterweise sind hierfür zwei Hydraulikkreisläufe aus erster und zweiter hydraulischer Verdrängermaschine einerseits und vierter und dritter hydraulischer Verdrängermaschine andererseits vorgesehen, so dass eine Arbeitsteilung erfolgt, durch welche eine einfache Ansteuerung des erfindungsgemäßen Hydrauliksystems möglich ist.

Weiterhin vorteilhafterweise wird die Vorrichtung durch Umwandlung der hydraulischen Energie aus dem Hochdruckspeicher über die dritte hydraulische Verdrängermaschine angetrieben. Hierdurch ist es möglich, die dort gespeicherte hydraulische Energie zu nutzen, um die Antriebseinheit zu unterstützen, welche hierdurch einen geringere Ausgangsleistung benötigt.

Weiterhin vorteilhafterweise wird zudem durch Umwandlung der hydraulischen Energie aus dem Hochdruckspeicher über die erste und/oder vierte hydraulische Verdrängermaschine mechanische Energie an weitere Verbraucher abgegeben. Hierdurch ist es möglich, weitere Verbraucher bei Leistungsspitzen ebenfalls über den Hochdruckspeicher anzutreiben, hier allerdings mit einem geringeren Wirkungsgrad.

Die vorliegende Erfindung umfasst weiterhin ein hydraulisches Antriebssystem zum Antrieb einer Vorrichtung, mit einer Antriebseinheit, welche die Vorrichtung über einen primären hydraulischen Antrieb aus Hydraulikpumpe und Hydraulikmotor antreiben kann, mit einem sekundären hydraulischen Antrieb, welcher eine weitere hydraulische Verdrängermaschine, die zur Übertragung mechanischer Energie mit der Vorrichtung verbindbar oder verbunden ist, mit einem Hochdruckspeicher, welcher hydraulisch mit der weiteren Verdrängermaschine verbunden oder verbindbar ist, und mit einer Steuerung, wobei der primäre hydraulische Antrieb primär und der sekundäre hydraulische Antrieb sekundär geregelt ist.

Weiterhin umfasst die vorliegende Erfindung ein entsprechendes Verfahren zum Antrieb einer Vorrichtung über ein hydraulisches Antriebssystem mit einer Antriebseinheit, welche die Vorrichtung über einen primären hydraulischen Antrieb aus Hydraulikpumpe und Hydraulikmotor antreiben kann, sowie mit einem sekundären hydraulischen Antrieb, welcher eine weitere hydraulische Verdrängermaschine, die zur Übertragung mechanischer Energie mit der Vorrichtung verbindbar oder verbunden ist, und einem Hochdruckspeicher, welcher hydraulisch mit der weiteren Verdrängermaschine verbunden oder verbindbar ist, wobei der primäre hydraulische Antrieb primär und der sekundäre hydraulische Antrieb sekundär geregelt wird.

Der primär geregelte primäre hydraulische Antrieb gibt damit durch den Volumenstrom die Geschwindigkeit bzw. Position der Vorrichtung vor, so dass kleinere Ungenauigkeiten in der sekundären Regelung der weiteren hydraulischen Verdrängermaschine nicht zu einer sofortigen, ungewollten Bewegung des Verbrauchers führen. Hierdurch ergeben sich gerade aus sicherheitstechnischer Sicht enorme Vorteile gegenüber herkömmlichen sekundär geregelten Antrieben, welche sich insbesondere aufgrund dieser Problematik der kaum zu beherrschenden Regelungstechnik bisher nicht durchgesetzt hatten. Die erfindungsgemäße Kombination eines sekundär geregelten Antriebs mit einem primär geregelten Antrieb ermöglicht es dabei, die Vorteile einer einfachen Regelung mit den Vorteilen einer effektiven Energierückgewinnung zu verbinden.

Die erfindungsgemäßen Verfahren werden dabei vorteilhafterweise automatisch durch die Steuerung des erfindungsgemäßen hydraulischen Antriebssystems durchgeführt.

Die vorliegende Erfindung wird nun anhand von Ausführungsbeispielen und Zeichnungen näher beschrieben. Dabei zeigen:
- Figur 1a:: ein Ausführungsbeispiel des erfindungsgemäßen hydraulischen Antriebssystems zum Antrieb einer Winde mit einem geschlossenen primären Hydraulikkreislauf, wobei der Hochdruckspeicher über die erste hydraulische Verdrängermaschine des primären Hydraulikkreislaufs aufladbar ist,
- Figur 1b:: ein Ausführungsbeispiel des erfindungsgemäßen hydraulischen Antriebssystems zum Antrieb zweier Vorrichtungen, wobei zwei primäre geschlossene Hydraulikkreisläufe vorgesehen sind, und wobei der Hochdruckspeicher über den primären Hydraulikkreislauf mit dem höheren Druck aufladbar ist,
- Figur 1c:: ein Ausführungsbeispiel des erfindungsgemäßen hydraulischen Antriebssystems zum Antrieb zweier Verbraucher, mit zwei geschlossenen primären Hydraulikkreisläufen, wobei der Hochdruckspeicher über die ersten hydraulischen Verdrängermaschinen der jeweiligen primären Hydraulikkreisläufe aufladbar ist,
- Figur 2a:: ein Ausführungsbeispiel des erfindungsgemäßen hydraulischen Antriebssystems zum Antrieb einer Winde, mit einem geschlossenen primä- ren Hydraulikkreislauf, wobei eine vierte hydraulische Verdrängermaschine vorgesehen ist, über welche der Hochdruckspeicher aufladbar ist,
- Figur 2b:: eine alternative Ausführung des in Figur 2a gezeigten hydraulischen Antriebssystems,
- Figur 2c:: das in Figur 2a gezeigte Ausführungsbeispiel des erfindungsgemäßen hydraulischen Antriebssystems zum Antrieb eines Fahrantriebs,
- Figur 2d:: ein Ausführungsbeispiel des erfindungsgemäßen hydraulischen Antriebsssystems zum Antrieb zweier Verbraucher, mit zwei geschlossenen primären Hydraulikkreisläufen, wobei eine vierte hydraulische Verdrängermaschine vorgesehen ist, über welche der Hochdruckspeicher aufladbar ist,
- Figur 2e:: ein Ausführungsbeispiel des erfindungsgemäßen hydraulischen Antriebssystems, welches neben dem in Figur 2d gezeigten hydraulischen Antriebssystems einen weiteren Hydraulikkreislauf zum Antrieb eines weiteren Verbrauchers aufweist,
- Figur 3a:: ein Ausführungsbeispiel des erfindungsgemäßen hydraulischen Antriebssystems zum Antrieb einer Winde mit einem offenen primären Hydraulikkreislauf, wobei der Hochdruckspeicher über die erste hydraulische Verdrängermaschine des primären Hydraulikkreislaufs aufladbar ist,
- Figur 3b:: ein Ausführungsbeispiel des erfindungsgemäßen hydraulischen Antriebssystems zum Antrieb zweier Winden, mit zwei offenen primären Hydraulikkreisläufen, welche von einer einzigen ersten hydraulischen Verdrängermaschine mit Hydraulikfluid beaufschlagt werden, wobei der Hochdruckspeicher über die erste hydraulische Verdrängermaschine aufladbar ist,

- Figur 4:: ein Ausführungsbeispiel des erfindungsgemäßen hydraulischen Antriebssystems zum Antrieb einer ersten Vorrichtung, mit einem offenen primären Hydraulikkreislauf und einer vierten hydraulischen Verdrängermaschine, über welche der Hochdruckspeicher aufladbar ist, wobei ein weiterer Hydraulikkreislauf zum Antrieb eines weiteren Verbrauchers vorgesehen ist,
- Figur 5a:: ein Ausführungsbeispiel des erfindungsgemäßen hydraulischen Antriebssystem zum Antrieb eines Krans, mit einem erfindungsgemäßen hydraulischen Antriebssystem mit Energierückgewinnung zum Antrieb der Winde und zwei weiteren hydraulischen Kreisläufen zum Antrieb von Drehwerk und Wippwerk,
- Figur 5b:: ein Ausführungsbeispiel des erfindungsgemäßen hydraulischen Antriebssystems zum Antrieb eines Krans, mit einem erfindungsgemäßen hydraulischen Antriebssystem mit Energierückgewinnung zum Antrieb zweier Winden sowie zwei weiteren hydraulischen Kreisläufen zum Antrieb des Wippwerks und des Drehwerks,
- Figur 6a:: ein weiteres Ausführungsbeispiel eines erfindungsgemäßen hydraulischen Antriebssystems zum Antrieb einer Winde, wobei die Antriebseinheit zwei parallel geschaltete Motoren aufweist und
- Figur 6b:: ein weiteres Ausführungsbeispiel des erfindungsgemäßen hydraulischen Antriebssystems zum Antrieb einer Winde, wobei die Antriebseinheit sowie die erste und vierte hydraulische Verdrängereinheit doppelt ausgeführt sind.

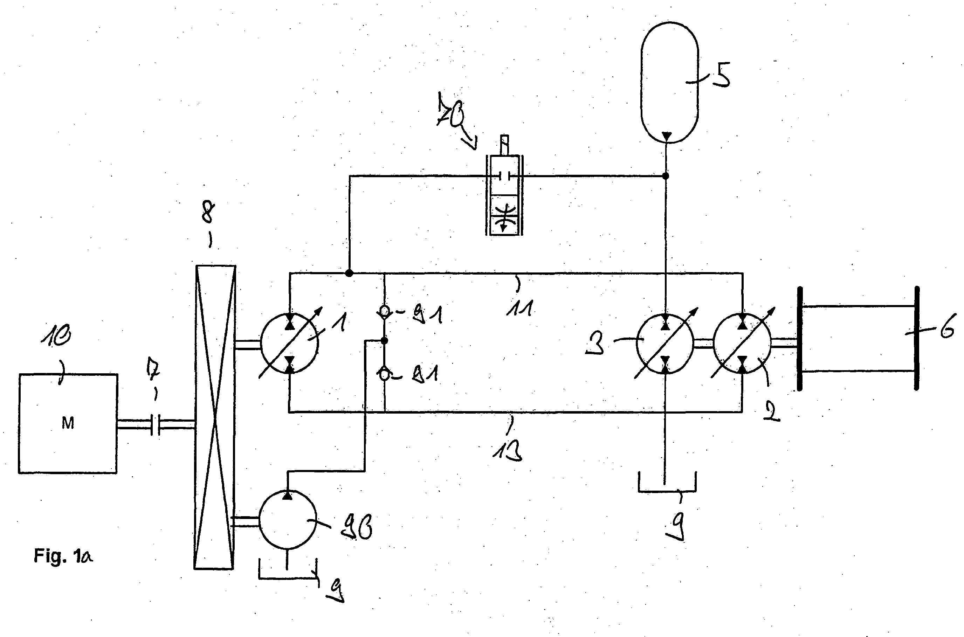

Figur 1a zeigt nun ein Ausführungsbeispiel des erfindungsgemäßen hydraulischen Antriebssystems zum Antrieb einer Winde 6. Dabei ist als Antriebseinheit 10 ein Dieselmotor vorgesehen, welcher die erste hydraulische Verdrängermaschine 1 antreibt. Hierzu ist die Antriebseinheit 10 über eine Kupplung 7 und ein Getriebe 8 mit der ersten hydraulischen Verdrängermaschine 1 verbunden. Die erste hydraulische Verdrängermaschine 1 ist mit einer zweiten hydraulischen Verdrängermaschine 2 über Hydraulikleitungen 11 und 13 verbunden, so dass sich ein geschlossener primärer Hydraulikkreislauf ergibt. Die zweite hydraulische Verdrängermaschine 2 ist mit der Winde 6 verbunden und treibt diese an.

Weiterhin ist eine dritte hydraulische Verdrängermaschine 3 vorgesehen, welche ebenfalls mit der Winde 6 verbunden ist. Diese ist über Hydraulikleitungen mit einem Hydraulikreservoir 9 und einem Hochdruckspeicher 5 verbunden. Der Hydraulikspeicher 5 steht weiterhin über ein Ventil 70 mit der ersten hydraulischen Verdrängermaschine 1 in Verbindung, und zwar über die druckseitige Hydraulikleitung 11 des primären Hydraulikkreislaufs.

Wird die erste hydraulische Verdrängermaschine 1 nun von der Antriebseinheit 10 angetrieben, treibt der primäre Hydraulikkreislauf über die zweite hydraulische Verdrängermaschine 2 die Winde 6 an, so dass eine Last angehoben werden kann. Wird umgekehrt die Last von der Winde 6 abgesenkt, kann die dabei frei werdende mechanische Energie in der dritten hydraulischen Verdrängermaschine in hydraulische Energie umgewandelt werden und im Hochdruckspeicher 5 gespeichert werden. Hierbei ergibt sich durch die direkte Umwandlung der mechanischen Energie in hydraulische Energie ein hervorragender Wirkungsgrad. Umgekehrt kann beim Anheben der Last die im Hochdruckspeicher 5 gespeicherte Energie dazu verwendet werden, über die dritte hydraulische Verdrängermaschine 3 die Arbeit der zweiten hydraulischen Verdrängermaschine 2 zu unterstützen und die Winde 6 ebenfalls anzutreiben. Wiederum ergibt sich durch die direkte Umwandlung von hydraulischer Energie in mechanische Energie ein hervorragender Wirkungsgrad. Hierbei befindet sich das Ventil 70 in der in Fig. 1a gezeigten Stellung, in welcher der Hochdruckspeicher 5 vom primären Hydraulikkreislauf getrennt ist.

Weiterhin kann in Betriebsphasen, in welchen die Winde 6 stillsteht oder die zur Betätigung der Winde 6 benötigte Antriebsenergie geringer ist als die von der Antriebseinheit 10 zur Verfügung gestellte Energie, durch Umschalten des Ventils 70 der Hochdruckspeicher 5 mit dem Ausgang der ersten hydraulischen Verdrängereinheit 1 verbunden werden, um den Hochdruckspeicher 5 aufzuladen. Wiederum ergibt sich ein hervorragender Wirkungsgrad, da die von der Antriebseinheit zur Verfügung gestellte mechanische Energie direkt durch die erste hydraulische Verdrängermaschine 1 in hydraulische Energie umgewandelt wird, welche im Hochdruckspeicher 5 gespeichert wird. Zur Ansteuerung des Speicherbetriebs ist das Ventil 70 in seiner geöffneten Stellung drosselbar.

Das Hydraulikfluid, welches während dem Speicherbetrieb durch die erste hydraulische Verdrängermaschine 1 in den Hochdruckspeicher 5 gepumpt wird, wird dabei von einer kleineren Speisepumpe 90 zur Verfügung gestellt, welche die Niederdruckseite 13 über ein Rückschlagventil 91 mit einem Minimaldruck versorgt und so auch in bekannten geschlossen Hydraulikkreisläufen Leckölverluste ausgleicht. Diese Speisepumpe 90 versorgt nun erfindungsgemäß die erste hydraulische Verdrängereinheit 1 mit dem Hydraulikfluid, welches diese in den Hochdruckspeicher 5 pumpt.

Erfindungsgemäß ist es dadurch, dass der Hochdruckspeicher 5 direkt über eine hydraulische Verdrängermaschine aufladbar ist, welche zur Übertragung mechanischer Energie mit der Antriebseinheit 10 in Verbindung steht, möglich, mit einem hervorragenden Wirkungsgrad Energie auch dann zu speichern, wenn die Winde 6 stillsteht. Hierdurch kann die Antriebseinheit 10, z. B. in Form eines Dieselmotors, immer an einem optimalen Betriebspunkt betrieben werden, wobei die von der Antriebseinheit 10 zur Verfügung gestellte mechanische Energie entweder zum Antrieb der Winde 6 herangezogen wird oder im Hochdruckspeicher 5 gespeichert wird. Zudem kann Energie aus der Bewegung der Winde 6 über die dritte hydraulische Verdrängermaschine 3 zurückgewonnen und gespeichert werden. Weiterhin ist es möglich, in Phasen mit hoher Last die gespeicherte hydraulische Energie über die dritte hydraulische Verdrängermaschine zum Antrieb der Winde 6 zu nutzen. Hierdurch kann die Antriebseinheit 10 erheblich kleiner dimensioniert werden, da Lastspitzen ausgeglichen werden.

Bei der ersten, zweiten und dritten hydraulischen Verdrängermaschinen handelt es sich dabei um Verstellpumpe mit zwei Förderrichtungen, über deren Einstellung das hydraulische System angesteuert wird. Dabei bestimmt der Volumenstrom durch den geschlossenen Hydraulikkreislauf aus erster und zweiter hydraulischer Verdrängermaschine die Bewegung der Winde, während die dritte hydraulische Verdrängermaschine je nach Lastsituation von der Winde 6 angetrieben wird oder die Winde 6 antreibt. Dabei kann der primäre Hydraulikkreislauf primär geregelt werden, während die dritte hydraulische Antriebseinheit sekundär geregelt wird, so dass sich auch die jeweiligen Vorteile (sichere und zuverlässige Ansteuerung bei primärer Regelung und effektive Energierückgewinnung bei sekundärer Regelung) kombinieren lassen, während sich die jeweiligen Nachteile aufheben.

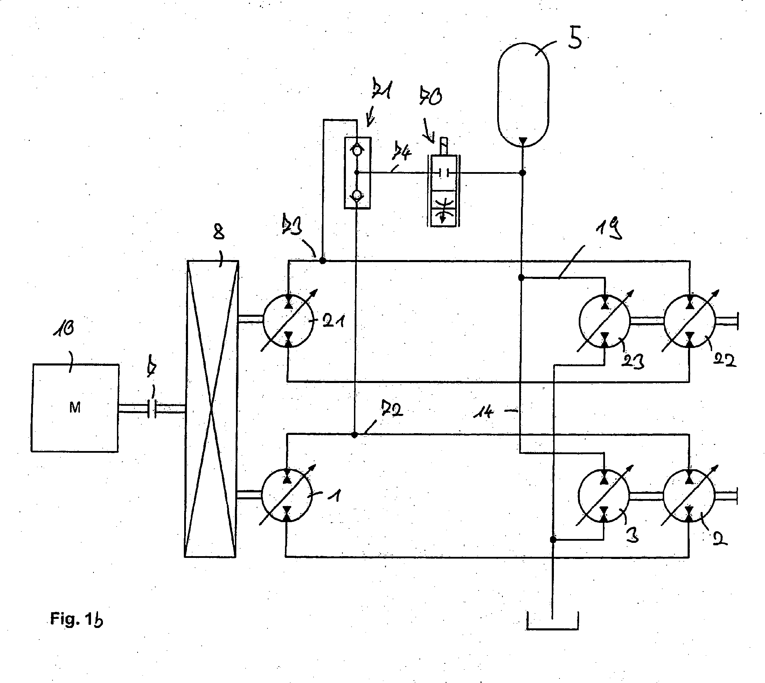

Figur 1b zeigt nun ein weiteres Ausführungsbeispiel des erfindungsgemäßen hydraulischen Antriebssystems zum Antrieb zweier Verbraucher. Dabei sind zwei geschlossene primäre Hydraulikkreisläufe zum Antrieb der jeweiligen Verbraucher vorgesehen, welche im wesentlichen den in Figur 1a gezeigten primären Hydraulikkreisläufen entsprechen. Die ersten hydraulischen Verdrängermaschinen 1 und 21 der jeweiligen primären Hydraulikkreisläufe sind dabei über das Getriebe 8 parallel durch die Antriebseinheit 10 antreibbar und jeweils mit zweiten hydraulischen Verdrängermaschinen 2 und 22 hydraulisch verbunden, welche die erste und die zweite Vorrichtung antreiben. Mit den beiden Vorrichtungen sind jeweils dritte hydraulische Verdrängermaschinen 3 und 23 verbunden. Die dritten hydraulischen Verdrängermaschinen 2 und 23 stehen dabei mit einem Anschluß mit dem Hydraulikreservoir 9 in Verbindung, mit dem anderen Anschluß mit dem Hochdruckspeicher 5. Der Hochdruckspeicher 5 ist weiterhin über ein Ventil 70 mit einer Ventilanordnung 71 verbunden. Die Ventilanordnung 71 umfasst zwei Rückschlagventile, über welche die Verbindungsleitung 74 zwischen Ventil 70 und Ventilanordnung 71 jeweils mit der Druckseite 72 bzw. 73 der primären Hydraulikkreisläufe in Verbindung steht. Die Hydraulikspeicherung bei der in Figur 1b gezeigten Ausführungsbeispiel entspricht damit im wesentlichen der auch in Figur 1a gezeigten Speicherung, wobei in der geöffneten Stellung des Ventils 70 der Hochdruckspeicher 5 jeweils über den primären Hydraulikkreislauf mit dem höheren Druck aufgeladen werden kann.

Durch das in Figur 1b gezeigte Ausführungsbeispiel ist es möglich, die erfindungsgemäßen Betriebsmodi der Energiespeicherung entweder über die ersten oder dritten hydraulischen Verdrängermaschinen analog zu dem in Figur 1a gezeigten Ausführungsbeispiel durchzuführen. Ebenfalls kann die im Hochdruckspeicher 5 gespeicherte hydraulische Energie jeweils über die dritten hydraulischen Verdrängermaschinen 3 und 23 zum Antrieb der beiden Vorrichtungen verwendet werden.

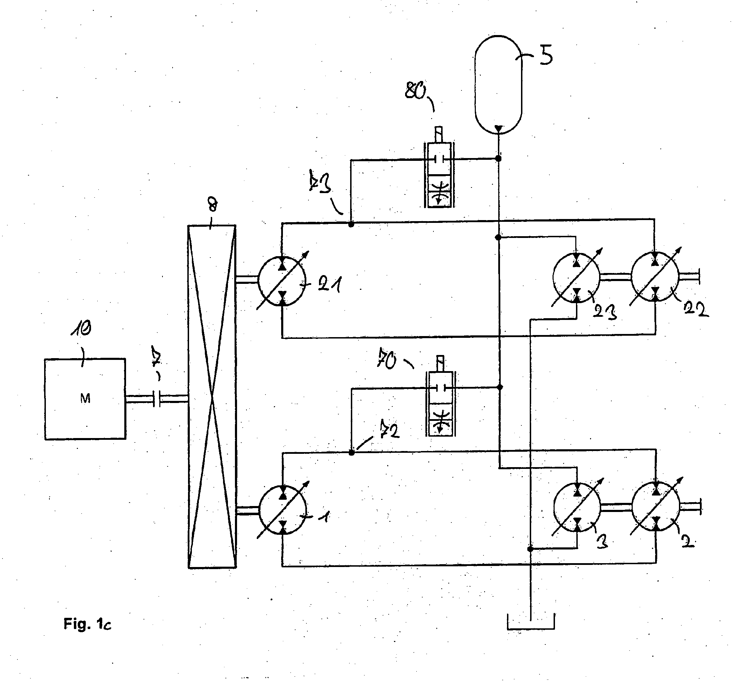

Figur 1c zeigt eine weitere Ausführung des erfindungsgemäßen Antriebssystems, bei welchem wie in Figur 1b zwei Vorrichtungen angetrieben werden. Die primären Antriebskreisläufe entsprechend dabei den in Figur 1b gezeigten Antriebskreisläufen identisch, während anstelle der Ventilanordnung 71 jeweils getrennte Steuerventile 70 und 80 vorgesehen sind, über welche der Hochdruckspeicher 5 mit der Druckseite 72 bzw. 73 der primären Hydraulikkreisläufe in Verbindung steht. Die Ventile 70 und 80 arbeiten dabei analog zu dem in Figur 1a gezeigten Ventil 70, so dass eine Aufladung des Hochdruckspeichers 5 über die jeweiligen ersten hydraulischen Verdrängermaschinen 1 und 21 der jeweiligen primären Hydraulikkreisläufe möglich ist.

Bei den in Figur 1b und 1c gezeigten Ausführungsbeispielen erfolgt die Bereitstellung des Hydraulikfluids, welches über die ersten hydraulischen Verdrängermaschinen 1 und 21 in den Hochdruckspeicher 5 gepumpt wird, dabei wie in dem in Figur 1 a gezeigten Ausführungsbeispiel über die jeweilige Leckölstromkompensation, welche wiederum über eine nicht gezeigte Speisepumpe erfolgt.

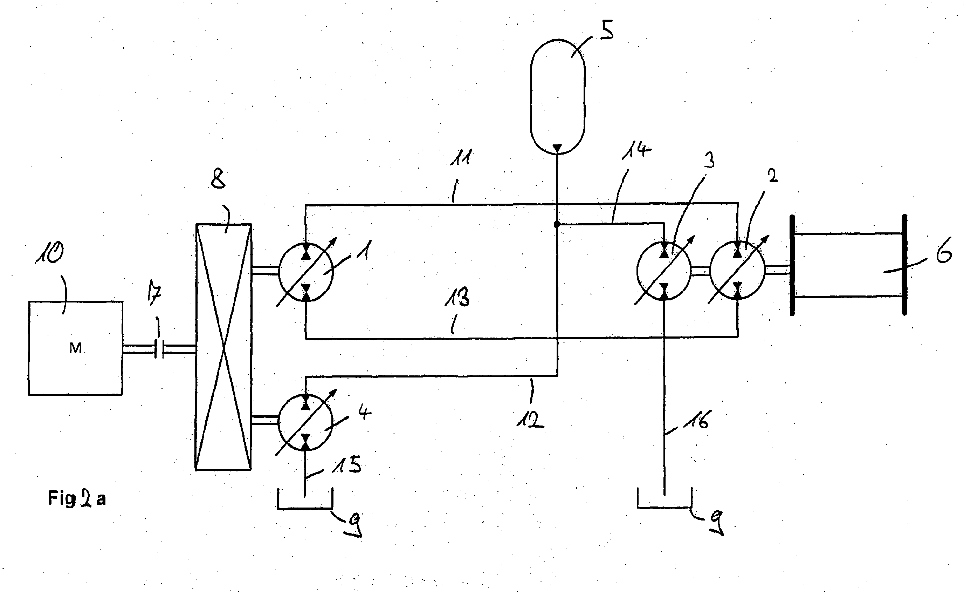

Figur 2a zeigt ein weiteres Ausführungsbeispiel des erfindungsgemäßen hydraulischen Antriebssystems zum Antrieb einer Winde 6 eines Kranes, bei welchem die Aufladung des Hochdruckspeichers über eine vierte hydraulische Verdrängereinheit 4 erfolgt. Dabei ist als Antriebseinheit 10 ebenfalls ein Dieselmotor vorgesehen, welcher über eine Kupplung 7 mit einem Getriebe 8 in Verbindung steht. Das Getriebe 8 steht wiederum mit einer ersten hydraulischen Verdrängermaschine 1 und der vierten hydraulischen Verdrängermaschine 4 in Verbindung. Über die Kupplung 7 und das Getriebe 8 kann die Antriebseinheit 10 damit die erste hydraulische Verdrängermaschine 1 und die vierte hydraulische Verdrängermaschine 4 antreiben.

Die erste hydraulische Verdrängermaschine 1 ist über die Hydraulikleitungen 11 und 13 mit einer zweiten hydraulischen Verdrängermaschine 2 verbunden, so dass sich ein Hydraulikkreislauf aus erster und zweiter hydraulischer Verdrängermaschine ergibt. Die zweite hydraulische Verdrängermaschine 2 ist wiederum mit der Winde 6 verbunden und treibt diese an. Der Hydraulikkreislauf aus erster und zweiter hydraulischer Verdrängermaschine ist im Ausführungsbeispiel dabei ein geschlossener Hydraulikkreislauf, so dass in dem Kreislauf aus erster hydraulischer Verdrängermaschine 1, Hydraulikleitung 11, zweiter hydraulischer Verdrängermaschine 2 und Hydraulikleitung 13 Hydraulikfluid zirkuliert, wenn die erste hydraulische Verdrängermaschine durch die Antriebseinheit 10 angetrieben wird und als Pumpe arbeitet.

Weiterhin ist eine dritte hydraulische Verdrängermaschine 3 vorgesehen, deren Antriebswelle direkt mit der Antriebswelle der zweiten hydraulischen Verdrängermaschine verbunden ist. Die vierte hydraulische Verdrängermaschine 4 und die dritte hydraulische Verdrängermaschine 4 sind dabei über Hydraulikleitungen 12 und 14 mit dem Hochdruckspeicher 5 verbunden. Im jeweiligen Pumpbetrieb der vierten bzw. dritten hydraulischen Verdrängermaschine können diese Hydraulikflüssigkeit aus einem Hydraulikreservoir 9 in den Hochdruckspeicher 5 pumpen. Umgekehrt kann im Arbeitsbetrieb der vierten und der dritten hydraulischen Verdrängermaschine Hydraulikfluid vom Hochdruckspeicher 5 über die jeweiligen Verdrängermaschinen zurück zum Hydraulikreservoir 9 fließen, so dass diese als Hydromotoren arbeiten.

Damit besteht im erfindungsgemäßen hydraulischen Antriebssystem eine direkte Übertragungsmöglichkeit von mechanischer Energie von der Antriebseinheit 10 sowohl auf die erste als auch auf die vierte hydraulische Verdrängermaschine. Weiterhin besteht eine direkte Übertragungsmöglichkeit von mechanischer Energie von der zweiten und dritten hydraulischen Verdrängermaschine auf die Winde 6 bzw. umgekehrt von der Winde 6 auf die zweite und dritte hydraulische Verdrängermaschine.

Die Winde 6 kann nun zunächst über den geschlossenen Hydraulikkreislauf aus erster und zweiter Verdrängermaschine angetrieben werden, wobei die von der Antriebseinheit 10 zur Verfügung gestellte mechanische Energie von der ersten hydraulischen Verdrängermaschine in hydraulische Energie umgesetzt wird und von der zweiten hydraulischen Verdrängermaschine wiederum in mechanische Energie umgesetzt wird, welche die Winde 6 antreibt. Wird umgekehrt mechanische Energie von der Winde 6 zurück auf das hydraulische Antriebssystem übertragen, wie dies bei einem Absenken der Last der Fall ist, muss die hydraulische Energie nun nicht mehr wie bei bestehenden Systemen vernichtet oder an der Antriebseinheit 10 abgestützt werden, sondern treibt die dritte hydraulische Verdrängermaschine 3 an, welche nun als Pumpe arbeitet und Hydraulikflüssigkeit von dem Reservoir 9 in den Hochdruckspeicher 5 pumpt. Durch die direkte Umwandlung der mechanischen Energie in hydraulische Energie ohne weitere zwischengeschaltete Umwandlung lässt sich dabei ein hervorragender Wirkungsgrad erzielen, so dass die Energie aus dem Absenken der Last effektiv gespeichert werden kann.

Umgekehrt kann beim Anheben einer Last über die Winde 6 die Winde auch über die dritte hydraulische Verdrängermaschine 3 mit angetrieben werden, wobei Hydraulikflüssigkeit vom Hochdruckspeicher 5 zum Hydraulikreservoir 9 fließt. Dadurch wird der Antrieb über den Hydraulikkreislauf aus der ersten und zweiten hydraulischen Verdrängermaschine unterstützt, so dass auch die Antriebseinheit 10 kleiner dimensioniert werden kann. Dabei ist der Wirkungsgrad durch die direkte Umwandlung der hydraulischen Energie aus dem Hydraulikspeicher in mechanische Energie, welche die Winde 6 antreibt, wiederum sehr hoch, so dass insgesamt eine effektive Energierückgewinnung erfolgen kann.

Zudem kann der Hochdruckspeicher 5 auch über die vierte hydraulische Verdrängermaschine 4 aufgeladen werden, wenn die von der Antriebseinheit 10 zur Verfügung gestellte Energie nicht oder nicht komplett für den Antrieb der ersten hydraulischen Verdrängermaschine 1 benötigt wird. Hierdurch ist es insbesondere möglich, den Dieselmotor der Antriebseinheit 10 bei einem optimalen Betriebspunkt zu betreiben, wobei in Phasen, in welchen nur wenig Leistung zum Antrieb der Winde 6 benötigt wird, der Hochdruckspeicher 5 aufgeladen wird, und in Phasen, in welchen besonders hohe Leistungen nötig sind, die Energie aus dem Hochdruckspeicher 5 wieder abgegeben wird und über die dritte hydraulische Verdrängermaschine die Winde mit antreibt.

Dabei bestimmt der Volumenstrom durch den geschlossenen Hydraulikkreislauf aus erster und zweiter hydraulischer Verdrängermaschine die Bewegung der Winde, während die dritte hydraulische Verdrängermaschine je nach Lastsituation von der Winde 6 angetrieben wird oder die Winde 6 antreibt, und die vierte hydraulische Verdrängermaschine 4 je nach Betriebssituation den Hochdruckspeicher 5 auflädt oder nicht. Auch hiermit lässt sich eine primäre Regelung des primären Antriebs und eine sekundäre Regelung des sekundären Antriebs aus dritter und vierter hydraulischer Verdrängermaschine und Hochdruckspeicher realisieren.

Im Ausführungsbeispiel sind dabei alle hydraulischen Verdrängermaschinen als verstellbare Verdrängermaschinen mit zwei Förderrichtungen ausgeführt, wobei alle hydraulischen Verdrängermaschinen sowohl als Hydraulikpumpen als auch als Hydraulikmotoren arbeiten können. Für den Betrieb des erfindungsgemäßen hydraulischen Antriebssystems ist eine solche Ausführung aller hydraulischer Verdrängermaschinen jedoch nicht zwingend nötig.

Üblicherweise arbeitet dabei die erste hydraulische Verdrängermaschine 1 als Pumpe und die zweite hydraulische Verdrängermaschine 2 als Motor, wobei die Verstellbarkeit die Ansteuerung der Winde ermöglicht. Die vierte hydraulische Verdrängermaschine 4 arbeitet üblicherweise als Pumpe, um den Hydraulikspeicher 5 aufzuladen. Ihre Verstellbarkeit dient dabei der Ansteuerung dieser Aufladung. Die dritte hydraulische Verdrängermaschine arbeitet üblicherweise sowohl als Pumpe, als auch als Motor, wobei im Ausführungsbeispiel zwischen diesen Funktionen durch die Einstellung der Förderrichtung geschaltet werden kann. Die Verstellbarkeit der dritten hydraulischen Verdrängermaschine ermöglicht dabei neben dem Umschalten zwischen Pump- und Motorbetrieb die Steuerbarkeit der Energiespeicherung bzw. Energieabgabe durch den Hydraulikspeicher 5. Die hydraulischen Verdrängermaschinen 3 und 4 können so direkt und ohne Ventilanordnung mit dem Hochdruckspeicher 5 in Verbindung stehen, da die Ansteuerung über die Verstellung der Verdrängermaschinen erfolgt. Alternativ wäre jedoch auch eine über Ventile realisierte Ansteuerung denkbar.

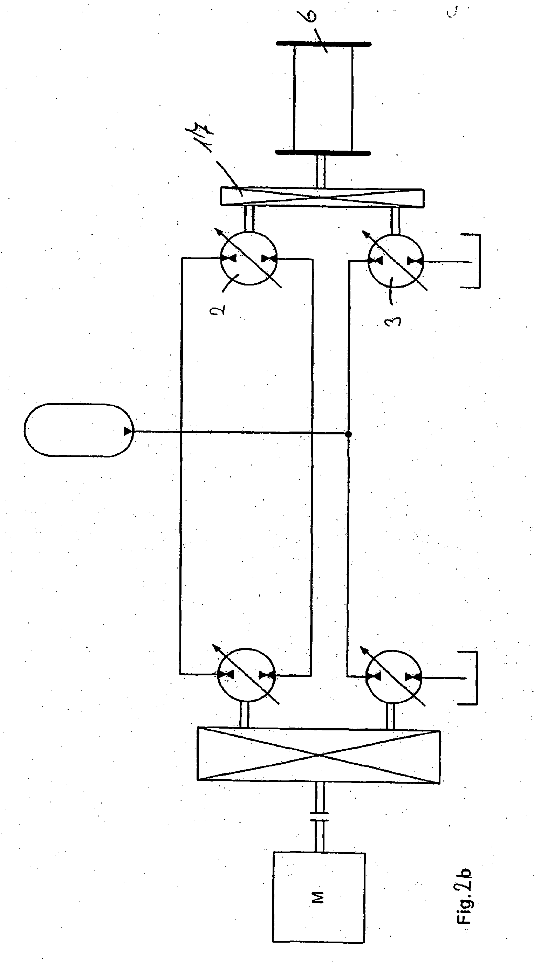

Das in Figur 2b gezeigte Ausführungsbeispiel des erfindungsgemäßen hydraulischen Antriebssystems stimmt dabei mit dem in Figur 2a gezeigten hydraulischen Antriebssystem zum Großteil überein, so dass auf eine nochmalige Beschreibung der übereinstimmenden Komponenten verzichtet wird. Einziger Unterschied zu der in Figur 2a gezeigten ersten Ausführungsform ist dabei die Verbindung der zweiten und dritten hydraulischen Verdrängermaschine mit der Winde 6, welche im vierten Ausführungsbeispiel nun über das zwischengeschaltete Getriebe 17 erfolgt. Während also im Ausführungsbeispiel in Fig. 2a die zweite und die dritte hydraulische Verdrängermaschine und die Winde 6 hintereinander an einer Achse angeordnet sind, sind im vierten Ausführungsbeispiel die zweite und die dritte hydraulische Verdrängermaschine parallel angeordnet und mit einem Getriebe 17 verbunden, welches wiederum die Winde 6 antreibt.

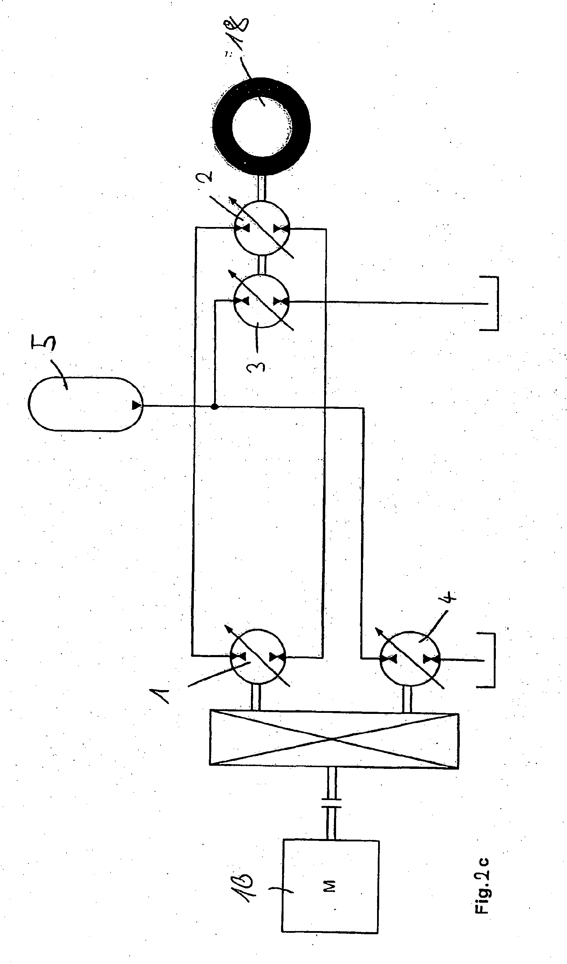

Figur 2c zeigt nun ein Ausführungsbeispiel des erfindungsgemäßen hydraulischen Antriebssystems, welches bezüglich der Antriebskomponenten mit dem in Figur 2a gezeigten Ausführungsbeispiel übereinstimmt, jedoch nicht zum Antrieb einer Kranwinde verwendet wird, sondern als Fahrantrieb eines mobilen Arbeitsgerätes, in diesem Fall eines Reachstackers oder Radladers. Dabei erfolgt der Fahrantrieb hydraulisch zunächst über den geschlossenen Hydraulikkreislauf aus erster und zweiter hydraulischer Verdrängermaschine 1 und 2, wobei nun beim Abbremsen des Fahrzeugs frei werdende Energie über die dritte hydraulische Verdrängermaschine 3 im Hochdruckspeicher 5 gespeichert werden kann und bei Beschleunigungsmanövern wieder abgegeben werden kann, wobei die dritte hydraulische Verdrängermaschine 3 dann als Hydraulikmotor arbeitet und zusammen mit der zweiten hydraulischen Verdrängermaschine das Fahrzeug antreibt. Wird für den Fahrantrieb nur wenig Leistung benötigt, kann der Hochdruckspeicher 5 über die vierte hydraulische Verdrängermaschine 4 direkt von der Antriebseinheit 10 aufgeladen werden, so dass die Antriebseinheit 10 immer auf einem optimalen Betriebspunkt betrieben werden kann. Durch die direkte Energieumwandlung ergeben sich auch für den Fahrantrieb große Energieeinsparungen und Leistungssteigerungen.

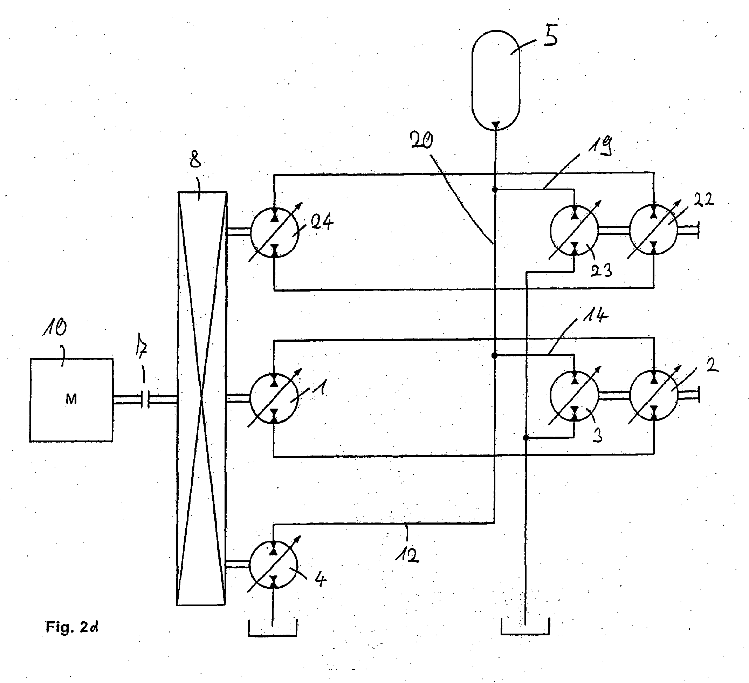

Bei dem in Figur 2d gezeigten Ausführungsbeispiel sind nunmehr zwei Vorrichtungen vorgesehen, welche über das hydraulische Antriebssystem getrennt angetrieben werden können. Bei einem Kran könnten so z. B. sowohl die Hubwinde als auch das Drehwerk oder zwei Winden über das hydraulische Antriebssystem angetrieben werden. Die Antriebseinheit 10, wiederum ein Dieselmotor, treibt dabei über eine Kupplung 7 und ein Getriebe 8 zwei parallel angeordnete erste hydraulische Verdrängermaschinen 1 und 21 sowie eine vierte hydraulische Verdrängermaschine 4 an. Die erste hydraulische Verdrängermaschine 1 bildet dabei wie in den vorherigen Ausführungsbeispielen einen geschlossenen Hydraulikkreislauf mit einer zweiten hydraulischen Verdrängermaschine 2, um die erste Vorrichtung anzutreiben. Die weitere erste hydraulische Verdrängermaschine 21 bildet dann mit einer weiteren zweiten hydraulischen Verdrängermaschine 22 ebenfalls einen geschlossenen hydraulischen Kreislauf, um die zweite Vorrichtung anzutreiben. Mit den zweiten hydraulischen Verdrängermaschinen 2 und 22 ist jeweils eine dritte hydraulische Verdrängermaschine 3 und 23 verbunden, welche damit auch mit den jeweiligen Vorrichtungen in Verbindung stehen oder verbindbar sind.

Hierdurch ergibt sich die Möglichkeit, bei der Energierückgewinnung die über die jeweilige Vorrichtung eingebrachte mechanische Energie direkt über die hydraulischen Verdrängermaschinen 3 bzw. 23 in hydraulische Energie umzuwandeln, welche dann in einem gemeinsamen Hochdruckspeicher 5 gespeichert wird. Hierzu sind die zwei dritten hydraulischen Verdrängermaschinen 3 und 23 über Hydraulikleitungen 14 bzw. 19 mit dem Hochdruckspeicher 5 verbunden. Ebenso können beide Vorrichtungen über die jeweiligen dritten hydraulischen Verdrängermaschinen direkt mit dem Druck aus dem Hochdruckspeicher 5 angetrieben werden. Zum direkten Aufladen des Hochdruckspeichers 5 über die Antriebseinheit 10 ist weiterhin die vierte hydraulische Verdrängermaschine 4 über eine Hydraulikleitung 12 ebenfalls mit dem Hochdruckspeicher 5 verbunden. Wird die Antriebseinheit 10 also nicht oder nur wenig durch die beiden Verbraucher belastet, kann sie über die vierte hydraulische Verdrängermaschine den Hydraulikspeicher 5 aufladen, so dass wiederum die Antriebseinheit 10 bei einem optimalen Betriebspunkt betrieben werden kann.

Damit lässt sich das erfindungsgemäße Energiemanagement mit optimalen Wirkungsgraden auch für den Antrieb von zwei Verbrauchern einsetzen, ohne dass das Antriebssystem komplett verdoppelt werden müßte. Für den zusätzlichen Verbraucher ist als zusätzliches Element neben dem ohnehin notwendigen Antrieb aus erster und zweiter hydraulischer Verdrängermaschine 21 uns 22 lediglich eine weitere dritte hydraulische Verdrängermaschine 23 notwendig, während die vierte hydraulische Verdrängermaschine 4 und der Hochdruckspeicher 5 nicht verdoppelt werden müssen. Im Gegenteil ermöglicht der gemeinsame Hochdruckspeicher 5 einen einfachen Energieaustausch zwischen den beiden Antriebssystemen für die erste und die zweite Vorrichtung.

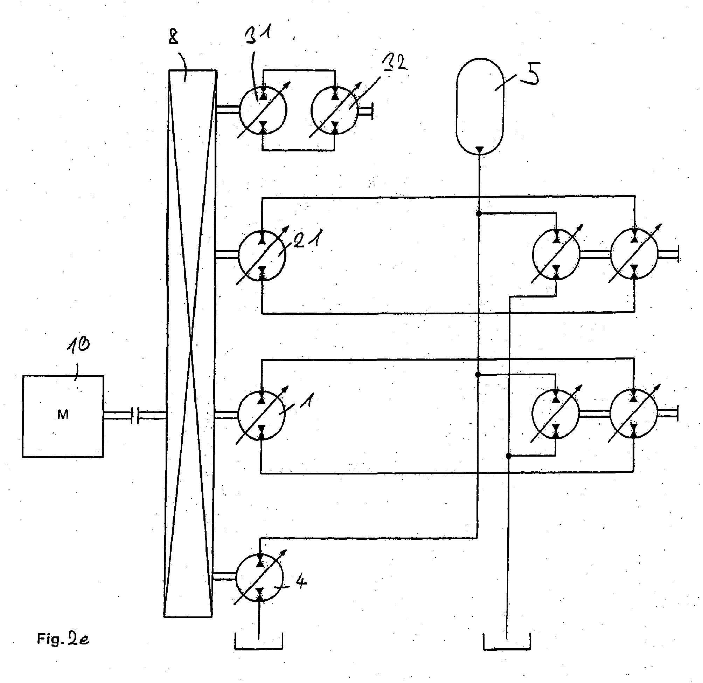

Bei dem in Figur 2e gezeigten Ausführungsbeispiel handelt es sich um ein Antriebssystem für drei Vorrichtungen, wobei das Antriebssystem für die ersten beiden Vorrichtungen mit dem in Figur 2d gezeigten Ausführungsbeispiel identisch ist, so dass auf die Beschreibung dieser Systemkomponenten verzichtet wird. Das Getriebe 8, welches von der Antriebseinheit 10 angetrieben wird, treibt nun neben den ersten hydraulischen Verdrängermaschinen 1 und 21 der ersten beiden Vorrichtungen und der vierten hydraulischen Verdrängermaschine 4 auch die parallel dazu angeordnete erste hydraulische Verdrängermaschine 31 der dritten Vorrichtung an. Die erste hydraulische Verdrängermaschine 31 der dritten Vorrichtung bildet dabei einen Hydraulikkreislauf mit der weiteren hydraulischen Verdrängermaschine 32, welche die dritte Vorrichtung antreibt. Hierbei handelt es sich wiederum um einen geschlossenen Kreislauf. An der dritten Vorrichtung ist nun keine weitere Verdrängermaschine vorgesehen, so dass bei einem Abbremsvorgang der dritten Vorrichtung der Hochdruckspeicher 5 nicht direkt aufgeladen werden kann. Es ist jedoch möglich, bei einem Abbremsvorgang der dritten Vorrichtung die mechanische Energie aus der dritten Vorrichtung über die hydraulische Verdrängermaschine zunächst in hydraulische Energie umzuwandeln, diese hydraulische Energie über die hydraulische Verdrängermaschine 31 wieder in mechanische Energie umzuwandeln und diese mechanische Energie dann über das Getriebe 8 den anderen hydraulischen Verdrängermaschinen zur Verfügung zu stellen, so dass die Energie z. B. über die vierte hydraulische Verdrängermaschine 4 wieder in hydraulische Energie umgewandelt werden kann und im Hochdruckspeicher 5 gespeichert werden. Hierdurch ergibt sich aber ein erheblich schlechterer Wirkungsgrad als bei der ersten und zweiten Vorrichtung, bei welchem eine direkte Umwandlung der mechanischen Energie in hydraulische Energie durch die dritten hydraulischen Verdrängermaschinen möglich ist.

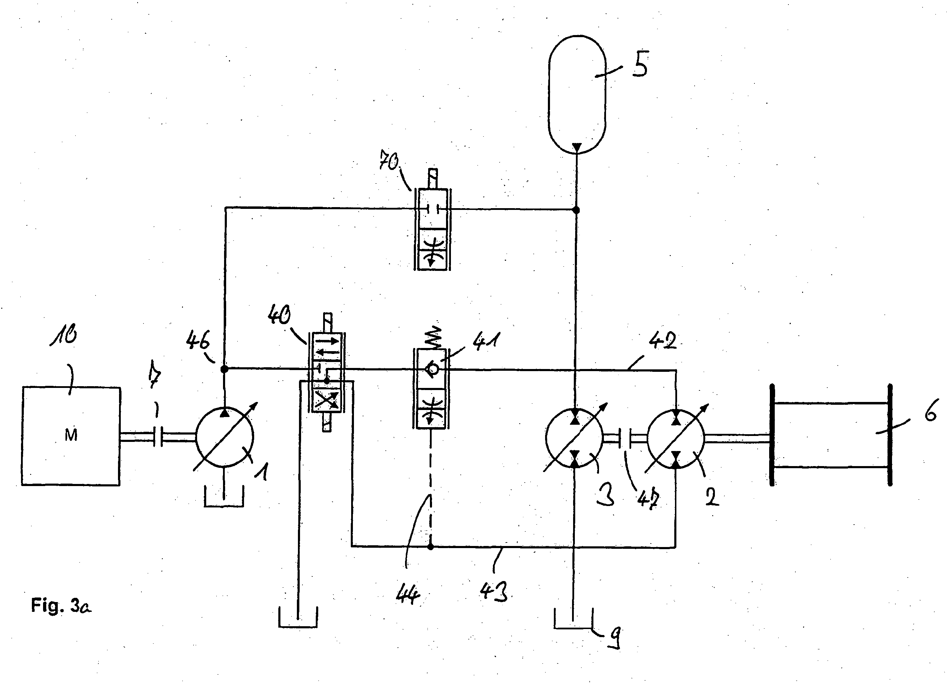

Figur 3a zeigt ein weiteres Ausführungsbeispiel des erfindungsgemäßen hydraulischen Antriebssystems zum Antrieb einer Winde 6, wobei ein offener primärer Hydraulikkreislauf zum Einsatz kommt. Die erste hydraulische Verdrängermaschine 1 wird dabei über die Antriebseinheit 10, mit welcher sie über die Kupplung 7 verbindbar ist, angetrieben und stellt den Druck für das gesamte hydraulische System zur Verfügung. Es handelt sich dabei bei der ersten hydraulischen Verdrängermaschine 1 um eine Hydraulikpumpe mit einer Förderrichtung und verstellbaren Volumenstrom. Der Ausgang 46 der ersten hydraulischen Verdrängermaschine 1 ist dabei über ein 4/3-Wegeventil 40 wahlweise mit den Anschlüssen 42 und 43 der zweiten hydraulischen Verdrängermaschine 2, welche die Winde 6 antreibt, verbindbar. Der jeweils nicht mit dem Ausgang 46 der ersten hydraulischen Verdrängermaschine 1 verbundene Anschluß der hydraulischen Verdrängermaschine 2 ist dann jeweils mit dem Hydraulikreservoir 9 verbunden. Weiterhin weist das Ventil 40 noch eine mittlere Stellung auf, in welcher beide Ausgänge 42 und 43 mit dem Hydraulikreservoir 9 in Verbindung stehen. Weiterhin ist in der für den Windenbetrieb hochdruckseitigen Anschlussleitung 42 der zweiten hydraulischen Verdrängermaschine 2 ein über eine Steuerleitung 44, welche mit der Niederdruckseite 43 in Verbindung steht, angesteuertes Ventil 41 vorgesehen. Wird die Hydraulikleitung 43 nicht mit Druck beaufschlagt, stellt das Ventil 41 ein Einwegventil dar, welches den Rückfluss von Hydraulikfluid von der zweiten zur ersten hydraulischen Verdrängermaschine verhindert. Im umgekehrten Fall stellt das Ventil 41 eine einstellbare Drossel dar.

Weiterhin ist eine dritte hydraulische Verdrängermaschine 3 erfindungsgemäß zur Übertragung mechanischer Energie über eine Kupplung 47 mit der Winde 6 verbindbar und steht mit dem Hochdruckspeicher 5 hydraulisch in Verbindung, so dass von der Winde 6 abgegebene mechanische Energie über die dritte hydraulische Verdrängermaschine 3 in hydraulische Energie umgewandelt werden kann und im Hochdruckspeicher 5 gespeichert werden kann. Umgekehrt kann die im Hochdruckspeicher 5 gespeicherte hydraulische Energie über die dritte hydraulische Verdrängermaschine zum Antrieb der Winde 6 und damit zur Unterstützung der Antriebseinheit 10 verwendet werden.

Der Hochdruckspeicher 5 steht nun über ein Ventil 70 mit der Ausgangsseite 46 der ersten hydraulischen Verdrängermaschine 1 in Verbindung. Diese Anordnung erlaubt im wesentlichen einen Betrieb wie bei dem in Figur 1a gezeigten Ausführungsbeispiel der vorliegenden Erfindung, wobei die erste hydraulische Verdrängermaschine 1, wenn sie den Hochdruckspeicher 5 auflädt, das hierfür notwendige Hydraulikfluid direkt aus dem Reservoir 9 bezieht, da es sich um einen offenen Hydraulikkreislauf handelt.

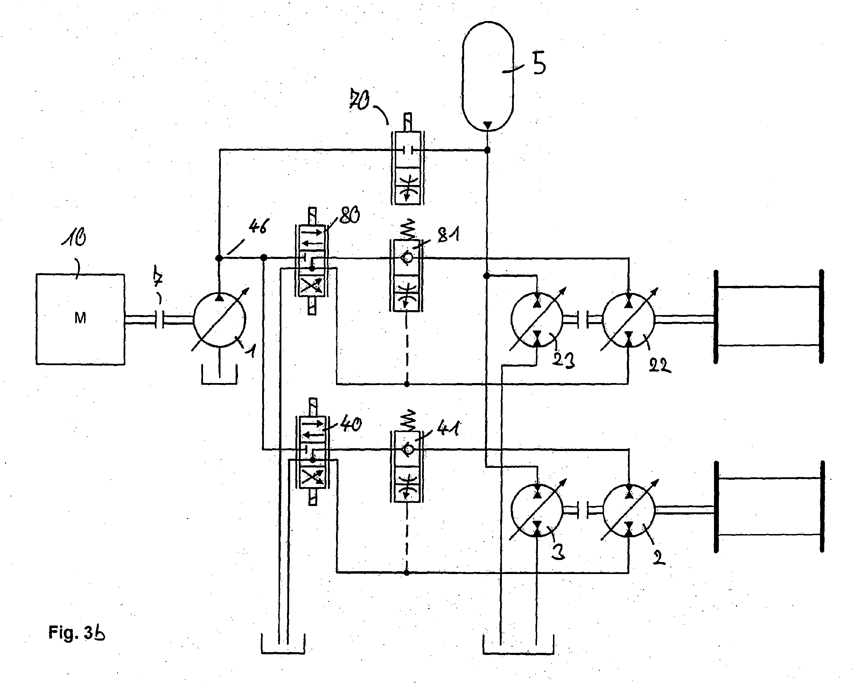

In Figur 3b ist nun ein weiteres Ausführungsbeispiel der vorliegenden Erfindung dargestellt, bei welchem die in Figur 3a verwendete Anordnung zum Antrieb zweier Winden eingesetzt wird. Hierzu sind zwei zweite hydraulische Verdrängermaschinen 2 und 22 vorgesehen, welche jeweils die erste bzw. die zweite Winde antreiben und über Ventile 40 und 41 bzw. 80 und 81 wie bei dem in Figur 3a gezeigten Ausführungsbeispiel durch die erste hydraulische Verdrängermaschine 1 angetrieben werden. Weiterhin sind jeweils dritte hydraulische Verdrängermaschine 3 und 23 vorgesehen, welche jeweils über Kupplungen mit der ersten bzw. der zweiten Winde verbindbar sind und hydraulisch jeweils mit einer Seite mit dem Hydraulikreservoir und mit der anderen Seite mit dem Hochdruckspeicher 5 in Verbindung stehen. Der Hochdruckspeicher 5 steht dabei weiterhin wie bei dem in Figur 3a gezeigten Ausführungsbeispiel mit dem Ausgang 46 der ersten hydraulischen Verdrängermaschine 1 über ein Ventil 70 in Verbindung.

Der Hochdruckspeicher 5 kann damit jeweils über die dritten hydraulischen Verdrängermaschinen 3 bzw. 23 mit der von den Winden abgegebenen Energie aufgeladen werden. Ebenso kann die im Hochdruckspeicher 5 gespeicherte Energie zum Antrieb der Winden verwendet werden.

Weiterhin ist es möglich, in Betriebsphasen, in welchen die von der Antriebseinheit 10 zur Verfügung gestellte Antriebsenergie nicht oder nicht komplett von den zweiten hydraulischen Verdrängermaschinen 2 und 22 zum Antrieb der Winden benötigt wird, die verbleibende Energie im Hydraulikspeicher 5 zu speichern. Auch hierdurch ergeben sich die weiter oben in Bezug auf die geschlossenen primären Hydraulikkreisläufe beschriebenen Vorteile, welche sich bei den nun gezeigten offenen primären Hydraulikkreisläufen ebenfalls einstellen.

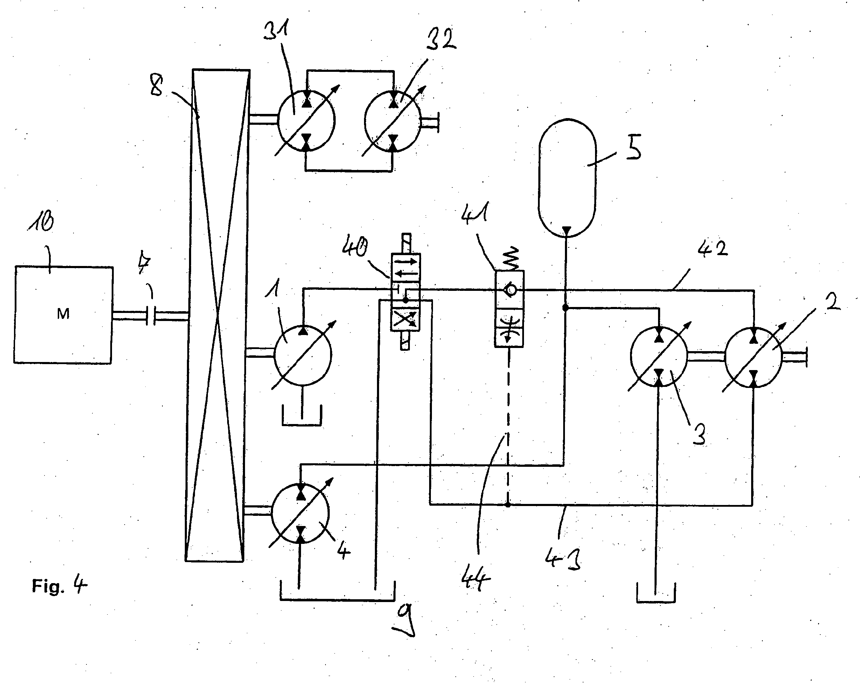

In Figur 4 ist ein weiteres Ausführungsbeispiel eines erfindungsgemäßen hydraulischen Antriebssystems mit einem offenen primären Hydraulikkreislauf gezeigt, bei welchem der Hochdruckspeicher 5 jedoch über eine vierte hydraulische Verdrängermaschine aufladbar ist. Der primäre hydraulische Kreislauf entspricht damit dem in Figur 3a gezeigten Ausführungsbeispiel, während die Speicherung dem in Figur 2a gezeigten Ausführungsbeispiel entspricht.

Die erste hydraulische Verdrängermaschine 1 ist dabei eine Verstellpumpe, welche über die Ventile 40 und 41 mit der jeweiligen Einlassseite der zweiten hydraulischen Verdrängermaschine 2 verbindbar ist, während die jeweilige Auslassseite über das Ventil 40 mit dem Hydraulikreservoir 9 verbindbar ist. Bei dem Ventil 40 handelt es sich dabei um ein 4/3-Wegeventil, welches in einer mittleren Stellung die beiden Anschlüsse der zweiten hydraulischen Verdrängermaschine mit dem Hydraulikreservoir verbindet und in den beiden äußeren Schaltstellungen den druckseitigen Ausgang der Hydraulikpumpe 1 entweder über die Hydraulikleitung 42 oder die Hydraulikleitung 43 mit einem der beiden Anschlüsse der zweiten hydraulischen Verdrängermaschine 2 verbindet und den jeweils anderen Anschluss der zweiten hydraulischen Verdrängermaschine mit dem Hydraulikreservoir 9, so dass die von der Hydraulikpumpe 1 aus dem Hydraulikreservoir 9 abgepumpte Hydraulikflüssigkeit jeweils in unterschiedlicher Richtung durch die zweite hydraulische Verdrängermaschine 2 fließt. Weiterhin ist in der Hydraulikleitung 42 das über die Steuerleitung 44 angesteuerte Ventil vorgesehen, welches, wenn die Hydraulikleitung 43 nicht mit Druck beaufschlagt wird, ein Einwegventil darstellt, und im umgekehrten Fall eine einstellbare Drossel. Diese Anordnung ist insbesondere für den Antrieb einer Winde vorgesehen.

Die Anordnung der vierten hydraulischen Verdrängermaschine, der dritten hydraulischen Verdrängermaschine und des Hydraulikspeichers 5 ist wiederum identisch zu den in Fig. 2a bis 2e gezeigten Ausführungsbeispielen, so dass auf diese nicht nochmals näher eingegangen wird. Auch der Betrieb mit dem entsprechenden Speichermanagement unterscheidet sich nicht von den vorherigen Ausführungsbeispielen.

Weiterhin ist in Fig. 4 noch ein weiterer Verbraucher vorgesehen, welcher über einen separaten Hydraulikkreislauf ohne eigene Energiespeicherung angetrieben wird.

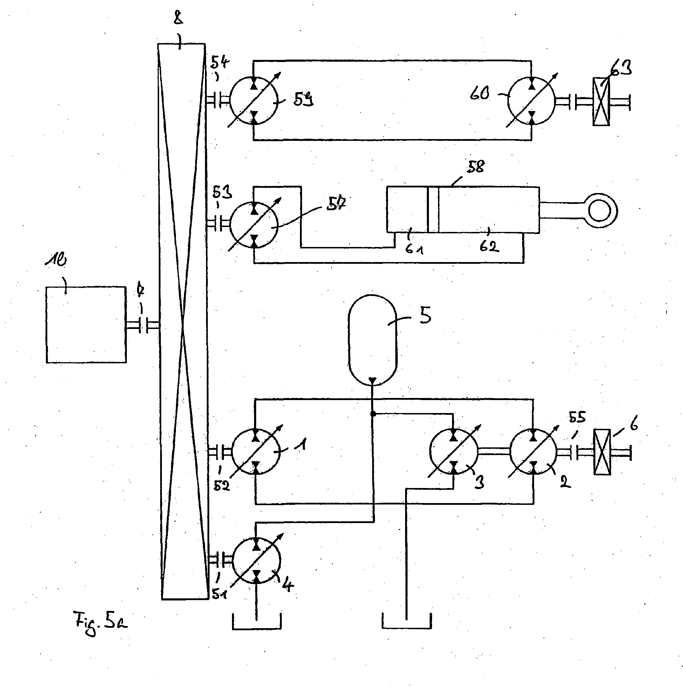

In Figur 5a ist ein hydraulisches Antriebssystems eines Kranes gezeigt, bei welchem die erfindungsgemäße direkte Energierückgewinnung für das Hubwerk verwendet wird, während Wippwerk und Drehwerk parallel über eigene Hydraulikkreisläufe ohne eigene Energierückgewinnung angetrieben werden. Das Antriebssystem des Hubwerks 6 entspricht dabei im wesentlichen dem in Figur 2a gezeigten Ausführungsbeispiel, wobei nun zusätzlich zwischen dem Getriebe 8 und der ersten bzw. vierten hydraulischen Verdrängermaschine Kupplungen 52 und 51. Weiterhin ist zwischen den auf einer gemeinsamen Achse montierten zweiten und dritten hydraulischen Verdrängermaschinen und dem Hubwerk 6 eine weitere Kupplung 55 vorgesehen. Die Ansteuerung und das Speichermanagement erfolgt aber im wesentlichen wie beim ersten Ausführungsbeispiel. Auch die Kupplungen sind nicht zwingend notwendig, so dass in alternativen Ausführungsbeispielen auch auf diese verzichtet werden könnte.

Weiterhin sind nun das Wippwerk 58 und das Drehwerk 63 als weitere Vorrichtungen, welche über das Hydrauliksystem angetrieben werden, vorgesehen. Das Getriebe 8 ist dabei über die Kupplung 53 mit einer Verstellpumpe 57 verbindbar, welche den Hydrozylinder des Wippwerks 58 antreibt. Hierzu sind die Druckkammern 61 und 62 des Hydrozylinders jeweils mit den Anschlüssen der Hydropumpe 57 verbunden, welche verstellbar ist und zwei Förderrichtungen aufweist, um das Wippwerk entsprechend in beide Richtungen zu bewegen.

Weiterhin ist das Getriebe 8 über die Kupplung 54 mit einer Hydropumpe 59 verbindbar, welche mit einem Hydromotor 60 einen geschlossenen Hydraulikkreislauf bildet, welcher über eine Kupplung 56 das Drehwerk 63 antreibt. Die Hydraulikpumpe 59 ist dabei als Verstellpumpe mit zwei Förderrichtungen ausgeführt, der Hydromotor 60 als Konstantmotor mit zwei Förderrichtungen.

Weder die Kupplungen zwischen Getriebe und hydraulischen Verdrängermaschinen, noch die Kupplungen zwischen hydraulischen Verdrängermaschinen und den Vorrichtungen sind dabei zwingend notwendig, so dass in alternativen Ausführungsbeispielen auch auf einige oder alle der Kupplungen verzichtet werden könnte.

Wie bereits mit Bezug auf Figur 2e ausgeführt, kann die Energierückgewinnung aus der Bewegung des Wippwerks und des Drehwerks dabei nicht direkt erfolgen, wie dies beim Hubwerk der Fall ist, sondern nur über den Umweg des Getriebes 8, so dass dort die Wirkungsgrade entsprechend schlechter sind. Da jedoch bei einem Kran die zentrale zyklische Tätigkeit die Betätigung des Hubwerks mit dem Anheben und dem Absenken der Last ist, ist die direkte Energierückgewinnung durch die vorliegende Erfindung für das Hubwerk von größerer Bedeutung.

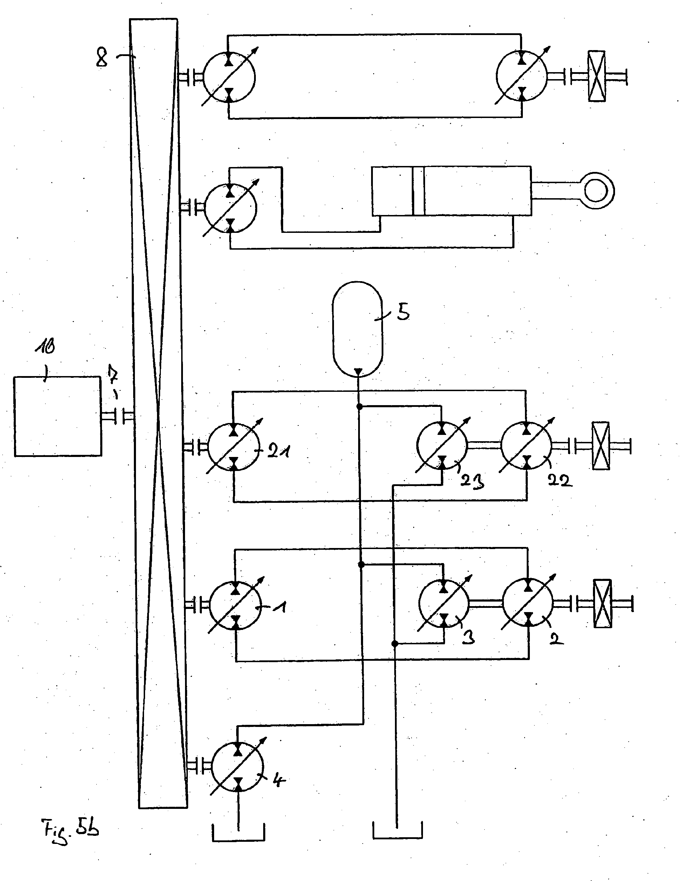

In Figur 5b ist ein weiteres Ausführungsbeispiel des erfindungsgemäßen hydraulischen Antriebssystems zum Antrieb eines Krans gezeigt, welches bezüglich des Wipp- und Drehwerks dem in 5a gezeigten Ausführungsbeispiel entspricht und nunmehr zwei Winden in die erfindungsgemäße hydraulische Energiespeicherung einbezieht. Das hydraulische Antriebssystem zum Antrieb der zwei Winden entspricht dabei dem in Figur 2d gezeigten Antriebssystem, d. h. es weist jeweils einen geschlossenen primären Hydraulikkreislauf aus erster hydraulischer Verdrängermaschine 1 bzw. 21 und zweiter hydraulischer Verdrängermachine 2 bzw. 22 auf, während die Energiespeicherung über dritte hydraulische Verdrängermaschinen 2 bzw. 23 erfolgt, sowie über eine vierte hydraulische Verdrängermachine 4, welche über eine Kupplung mit der Antriebseinheit 10 verbindbar ist.

Der Betrieb des in Figur 5b gezeigten Antriebssystems erfolgt dabei im Wesentlichen wie der des in Figur 5a gezeigten Antriebssystems, wobei nun jedoch eine Energierückgewinnung aus der Bewegung von zwei Winden möglich ist, sowie eine Unterstützung des Antriebs über die im Hochdruckspeicher 5 gespeicherte hydraulische Energie ebenfalls für beide Winden.

Wie bereits beschrieben, ergeben sich für die in Fig. 5a und 5b gezeigten Kranantriebe erfindungsgemäß massive Energieeinsparungen im Umschlagbetrieb durch die direkte Energierückgewinnung aus dem Hubwerk über die dritte hydraulische Verdrängermaschine 3, sowie die Nutzung des Hochdruckspeichers 5 und der dritten hydraulischen Verdrängermaschine 3 als sekundäre Antriebsquelle zur Leistungssteigerung, ohne dass hierzu die Primärantriebsleistung der Antriebseinheit 10 erhöht werden müßte. Weiterhin können Kühlerflächen reduziert werden, da die aus dem Hubwerk an den Kran abgegebene Energie gespeichert werden kann und nicht mehr vernichtet werden muss.

Durch die direkte Energiespeicherung der von der Antriebseinheit 10 abgegebenen Energie über die vierte hydraulische Verdrängermaschine 4 ist es weiterhin möglich, den Dieselmotor der Antriebseinheit 10 an einem optimalen Betriebspunkt zu betreiben, da nicht benötigte Energie effektiv gespeichert werden kann. Durch die entsprechend abgesenkte Drehzahl des Motors reduzieren sich sowohl die Lärmals auch die Abgasemissionen. Zudem erhöht sich die Lebensdauer des Dieselmotors.

Ebenso ist es möglich, bei Lastspitzen den Hochdruckspeicher 5 als sekundäre Antriebsquelle beim Antrieb des Wipp- oder Drehwerkes einzusetzen, indem die vierte hydraulische Verdrängermaschine als Hydromotor arbeitet und mechanische Energie über das Getriebe 8 an die anderen Verbraucher abgibt. Ebenso ist über den Umweg des Getriebes 8 auch eine Energierückgewinnung aus dem Wipp- und Drehwerk möglich. Allerdings ergibt sich hierbei nicht der selbe hohe Wirkungsgrad, welcher beim Hubwerk durch die erfindungsgemäße direkte Umwandlung möglich ist.

Selbstverständlich lassen sich die gleichen Vorteile, welche bezüglich eines Windenantriebs mit einem geschlossenen primären Hydraulikkreislauf und einer vierten hydraulischen Verdrängermaschine, über welche der Hochdruckspeicher 5 aufladbar ist, beschrieben wurden, ebenfalls erreichen, wenn für den Windenantrieb eine der weiter vorne beschriebenen alternativen Ausführungsformen gewählt wird. Es kann also ebenfalls ein offener primärer Hydraulikkreislauf gewählt werden und ebenso kann alternativ zur vierten hydraulischen Verdrängermaschine der Hochdruckspeicher 5 auch über die erste hydraulische Verdrängermaschine aufladbar sein.

Entscheidend ist dabei lediglich, dass der Hochdruckspeicher 5 über eine hydraulische Verdrängermaschine aufladbar ist, welche zur Übertragung von mechanischer Energie mit der Antriebseinheit 10 verbunden oder verbindbar ist, so dass Energie, welche nicht zum Antrieb der Winde benötigt wird, effizient gespeichert werden kann, insbesondere auch dann, wenn die Winde selbst stillsteht.

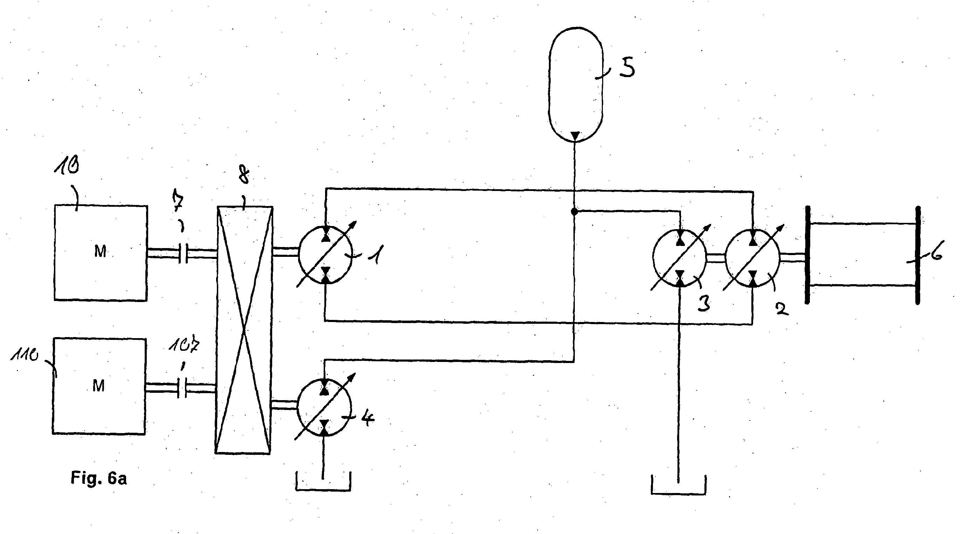

In Figur 6a ist nun ein weiteres Ausführungsbeispiel des erfindungsgemäßen hydraulischen Antriebssystems gezeigt, welches im wesentlichen dem in Figur 2a gezeigten Antriebssystem entspricht. Hierbei sind jedoch zwei Antriebsmotoren 10 und 110 vorgesehen, welche über Kupplungen 7 bzw. 107 mit dem Getriebe 8 in Verbindung stehen, über welches wiederum die erste und die vierte hydraulische Verdrängermaschine angetrieben werden. Gerade bei elektrischen Antriebsmotoren kann eine solche Anordnung von Vorteil sein, um die benötigten Leistungen zur Verfügung zu stellen. Dadurch, dass die beiden Motoren 10 und 110 parallel arbeiten, kann die von ihnen abgegebene mechanische Energie sowohl zum Antrieb der Winde 6, als auch zur Energiespeicherung herangezogen werden. Die erfindungsgemäßen Vorteile ergeben sich damit unabhängig davon, ob die Antriebseinheit ein oder mehrere parallel arbeitende Motoren aufweist.

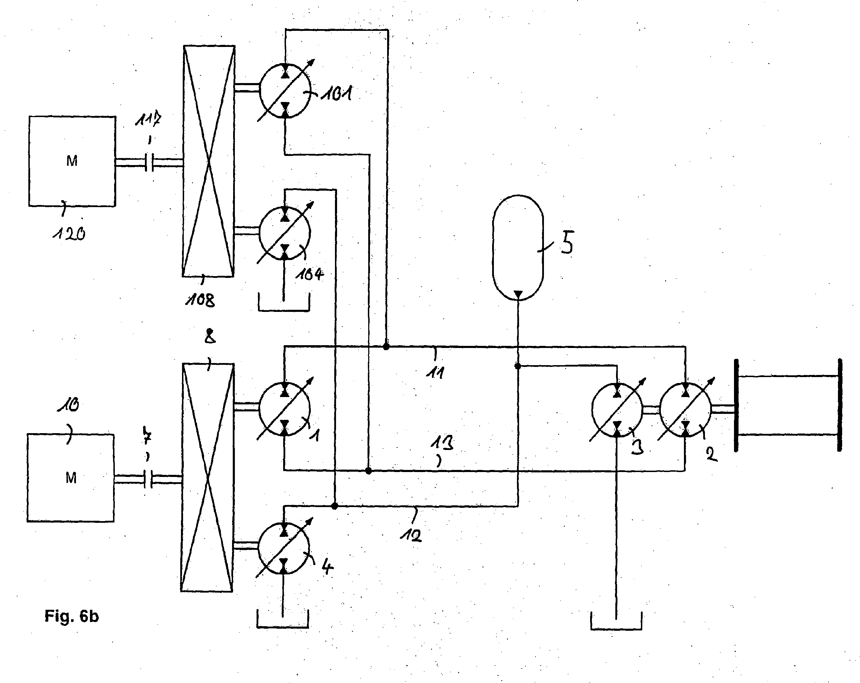

Bei dem in Figur 6b gezeigten Ausführungsbeispiel eines erfindungsgemäßen hydraulischen Antriebssystems ist zunächst ein erstes Teilsystem vorgesehen, welches dem in Figur 2a gezeigten System entspricht. Parallel hierzu ist ein zweites Teilsystem vorgesehen, bei welchem eine weitere Antriebseinheit 120 über eine Kupplung 117 und ein Getriebe 108 eine weitere erste hydraulische Verdrängermaschine 101 und eine weitere vierte hydraulische Verdrängermaschine 104 antreibt, welche hydraulisch parallel zur ersten und vierten hydraulischen Verdrängermaschine des ersten Teilsystems geschaltet sind. Hierdurch ergibt sich sowohl eine Leistungsverdopplung des Gesamtsystems, als auch eine redundante Auslegung, welche die Sicherheit des Gesamtsystems erhöht. Der Betrieb dieses Systems erfolgt dabei analog zu dem in Figur 2a gezeigten Ausführungsbeispiel, wobei lediglich die Antriebsseite aus Antriebseinheit und erster und vierter hydraulischer Verdrängermaschine verdoppelt wurde, während die zum Antrieb der Winde vorgesehene zweite und dritte hydraulische Verdrängermaschine einfach vorgesehen sind.

Auch bei diesem Antriebssystem ergeben sich die gleichen Vorteile, wie sie bereits weiter oben dargestellt wurden, wobei zusätzlich eine Redundanz bezüglich der Hydraulikdruckversorgung erreicht wurde.

## Patentansprüche

1. Hydraulisches Antriebssystem zum Antrieb einer Vorrichtung (6), mit einer Antriebseinheit (10), welche die Vorrichtung (6) über einen primären Hydraulikkreislauf aus einer ersten hydraulischen Verdrängermaschine (1) und einer zweiten hydraulischen Verdrängermaschine (2) antreiben kann, sowie mit einer dritten hydraulischen Verdrängermaschine (3), welche zur Übertragung mechanischer Energie mit der Vorrichtung (6) verbindbar oder verbunden ist, und einem Hochdruckspeicher (5), welcher hydraulisch mit der dritten Verdrängermaschine (3) verbunden oder verbindbar ist, so dass über die dritte hydraulische Verdrängermaschine eine Energierückgewinnung oder eine Unterstützung des Antriebssystems erfolgen kann, welche unabhängig vom primären Hydraulikkreislauf ist, wobei Wellen der zweiten hydraulischen Verdrängermaschine (2) und der dritten hydraulischen Verdrängermaschine (3) zur Übertragung mechanischer Energie mit einer Antriebswelle der Vorrichtung (6) verbindbar oder verbunden sind.
**dadurch gekennzeichnet**,
dass der Hochdruckspeicher (5) durch eine hydraulische Verdrängermaschine aufladbar ist, welche mit der Antriebseinheit (10) zur Übertragung mechanischer Energie so verbunden oder verbindbar ist, dass eine direkte Umsetzung der von der Antriebseinheit gelieferten mechanischen Energie in hydraulische Energie durch die hydraulische Verdrängermaschine erfolgt.

2. Hydraulisches Antriebssystem nach Anspruch 1, wobei der Hochdruckspeicher (5) durch die erste hydraulische Verdrängermaschine (1) aufladbar ist.

3. Hydraulisches Antriebssystem nach Anspruch 1, wobei eine vierte hydraulische Verdrängermaschine (4) vorgesehen ist, über welche der Hochdruck-Speicher (5) aufladbar ist.

4. Hydraulisches Antriebssystem nach einem der vorangegangenen Ansprüche, wobei der Hochdruckspeicher (5) über die dritte hydraulische Verdrängermaschine (3) aufladbar ist, indem diese als Hydraulikpumpe arbeitet.

5. Hydraulisches Antriebssystem nach einem der vorangegangenen Ansprüche, wobei die zur Ausladung verwendete hydraulische Verdrängermaschine mit einem Hydraulikreservoir (9) verbunden oder verbindbar ist.

6. Hydraulisches Antriebssystem nach einem der vorangegangenen Ansprüche, wobei die dritte hydraulische Verdrängermaschine (3) als Hydraulikmotor arbeiten und über den Hochdruckspeicher (5) angetrieben werden kann.

7. Hydraulisches Antriebssystem nach einem der vorangegangenen Ansprüche, wobei die erste und/oder vierte hydraulische Verdrängermaschine als Hydraulikmotor arbeiten und über den Hochdruckspeicher (5) angetrieben werden kann.

8. Hydraulisches Antriebssystem nach einem der vorangegangenen Ansprüche, wobei die erste hydraulische Verdrängermaschine (1) auch als Hydraulikmotor und die zweite hydraulische Verdrängermaschine (2) auch als Hydraulikpumpe arbeiten können, so dass die zweite Verdrängermaschine die erste hydraulische Verdrängermaschine antreibt.

9. Hydraulisches Antriebssystem nach einem der vorangegangenen Ansprüche, wobei die erste und die zweite hydraulische Verdrängermaschine einen geschlossenen hydraulischen Kreislauf bilden.

10. Hydraulisches Antriebssystem nach Anspruch 1, wobei die Wellen der zweiten und der dritten hydraulischen Verdrängermaschine direkt oder über ein Getriebe (17) verbunden sind.

11. Hydraulisches Antriebssystem nach Anspruch 1, wobei die Wellen der zweiten und/oder der dritten hydraulischen Verdrängermaschine mit der Antriebswelle der Vorrichtung (6) über mindestens eine Kupplung (55) verbindbar sind.

12. Hydraulisches Antriebssystem nach einem der vorangegangenen Ansprüche, wobei die Abtriebswelle der Antriebseinheit (10) mit Antriebswellen der ersten und/oder der vierten hydraulischen Verdrängermaschine zur Übertragung mechanischer Energie verbindbar oder verbunden sind.

13. Hydraulisches Antriebssystem nach Anspruch 12, wobei die Antriebswellen der ersten und der vierten hydraulischen Verdrängermaschine über mindestens zwei Kupplungen (51, 52) unabhängig voneinander mit der Antriebswelle der Antriebeseinheit verbindbar sind.

14. Hydraulisches Antriebssystem nach Anspruch 12 oder 13, wobei die Antriebseinheit (10) die Antriebswellen der ersten und/oder der vierten hydraulischen Verdrängermaschine über ein Getriebe (8) antreibt.

15. Hydraulisches Antriebssystem nach einem der vorangegangenen Ansprüche, wobei mindestens eine weitere Vorrichtung (63) über die Antriebseinheit (10) angetrieben wird.

16. Hydraulischer Antriebssystem nach Anspruch 15, wobei die weitere Vorrichtung (63) über einen Hydraulikkreislauf mit einer Hydraulikpumpe (59) angetrieben wird und die Hydraulikpumpe von der Antriebseinheit (10) angetrieben wird.

17. Hydraulisches Antriebssystem nach Anspruch 15 oder 16, wobei die weitere Vorrichtung (63) oder die die weitere Vorrichtung (63) antreibende Hydraulikpumpe (59) unabhängig von der ersten und/oder der vierten hydraulischen Verdrängermaschine über mindestens eine Kupplung (54) mit der Antriebseinheit (10) verbindbar ist.

18. Hydraulisches Antriebssystem nach einem der Ansprüche 15 bis 17, wobei die weitere Vorrichtung (63) oder die die weitere Vorrichtung (63) antreibende Hydraulikpumpe zur Übertragung mechanischer Energie mit der ersten und/oder vierten hydraulischen Verdrängermaschine verbindbar ist, insbesondere über mindestens eine Kupplung.

19. Hydraulisches Antriebssystem nach einem der vorangegangenen Ansprüche, wobei die Antriebseinheit (10) einen Verbrennungsmotor oder einen Elektromotor umfasst.

20. Hydraulisches Antriebssystem-nach Anspruch 19, wobei die Antriebseinheit einen einzigen Motor oder mehrere parallel ein Getriebe antreibende Motoren (10, 110) umfasst.

21. Hydraulisches Antriebssystem nach einem der vorangegangenen Ansprüche, wobei die erste und/oder die zweite hydraulische Verdrängermaschine ein verstellbares Verdrängungsvolumen aufweist.

22. Hydraulisches Antriebssystem nach einem der vorangegangenen Ansprüche, wobei die dritte und/oder die vierte hydraulische Verdrängermaschine ein verstellbares Verdrängungsvolumen aufweist.

23. Hydraulisches Antriebssystem nach einem der vorangegangenen Ansprüche, wobei die erste und/oder die zweite hydraulische Verdrängermaschine zwei Förderrichtungen aufweist.

24. Hydraulisches Antriebssystem nach einem der vorangegangenen Ansprüche, wobei die dritte und/oder die vierte hydraulische Verdrängermaschine zwei Förderrichtungen aufweist.

25. Hydraulisches Antriebssystem nach einem der vorangegangenen Ansprüche, wobei zwei Vorrichtungen vorgesehen sind, deren Antriebssysteme jeweils über erste, zweite und dritte hydraulische Verdrängermaschinen verfügen, wobei die ersten hydraulischen Verdrängermaschinen (1,21) zur Übertragung mechanischer Energie mit der Antriebseinheit (10) verbindbar oder verbunden sind,
die zweiten hydraulischen Verdrängermaschinen (2,22) und dritten hydraulischen Verdrängermaschinen (3,23) jeweils zur Übertragung mechanischer Energie mit den Vorrichtungen verbindbar oder verbunden sind,
wobei die ersten hydraulischen Verdrängermaschinen (1,21) jeweils hydraulisch mit den zweiten hydraulischen Verdrängermaschinen (2,22) verbunden oder verbindbar sind
und wobei der Hochdruckspeicher (5) hydraulisch mit den dritten hydraulischen Verdrängermaschinen (3,23) verbunden oder verbindbar ist.

26. Hydraulisches Antriebssystem nach Anspruch 25, wobei der Hochdruckspeicher (5) durch eine oder beide der zwei ersten hydraulischen Verdrängermaschinen (1,21) aufladbar ist.

27. Hydraulisches Antriebssystem nach Anspruch 25, wobei zusätzlich eine vierte hydraulische Verdrängermaschine (4) vorgesehen ist, über welche der Hochdruckspeicher (5) aufladbar ist.

28. Hydraulisches Antriebssystem nach einem der vorangegangenen Ansprüche mit einer Steuerung zur Ansteuerung der Speicher- und Arbeitsfunktionen des Systems.

29. Hydraulisches Antriebssystem nach einem der vorangegangenen Ansprüche zum Antrieb eines Kranes.

30. Hydraulisches Antriebssystem nach Anspruch 29, wobei die Vorrichtung (6) eine Winde, insbesondere eine Hubwinde ist.

31. Hydraulisches Antriebssystem nach einem der Ansprüche 1 bis 28 zum Antrieb eines mobilen Arbeitsgerätes, insbesondere eines Reachstackers oder eines Radladers.

32. Hydraulisches Antriebssystem nach Anspruch 31, wobei die Vorrichtung (6) ein Fahrantrieb ist.

33. Kran mit einem hydraulischen Antriebssystem nach einem der Ansprüche 1 bis 30.

34. Mobiles Arbeitsgerät, insbesondere Reachstacker oder Radlader, mit einem hydraulischen Antriebssystem nach einem der Ansprüche 1 bis 28 und 31 und 32.

35. Verfahren zum Betrieb eines Antriebssystems nach einem der vorangegangenen Ansprüche, wobei der Hochdruckspeicher (5) durch Umwandlung der Bewegungsenergie der Vorrichtung (6) über die dritte hydraulische Verdrängermaschine (3) aufgeladen wird und/oder der Hochdruckspeicher (5) über eine hydraulische Verdrängermaschine aufgeladen wird, welche mit der Antriebseinheit (10) zur Übertragung mechanischer Energie verbunden oder verbindbar ist, wenn die Leistung der Antriebseinheit (10) nicht oder nicht vollständig für den Antrieb der Vorrichtung (6) benötigt wird.

36. Verfahren nach Anspruch 35, wobei das Aufladen des Hochdruckspeichers (5) erfolgt, während die Vorrichtung (6) nicht bewegt wird.

37. Verfahren nach Anspruch 35 oder 36, wobei die Vorrichtung (6) durch Umwandlung der hydraulischen Energie aus dem Hochdruckspeicher (5) über die dritte hydraulische Verdrängermaschine (3) angetrieben wird.

38. Verfahren nach einem der vorangegangenen Ansprüche, wobei durch Umwandlung der hydraulischen Energie aus dem Hochdruckspeicher (5) über die erste und/oder vierte hydraulische Verdrängermaschine mechanische Energie an weitere Verbraucher abgegeben wird.

## Claims

1. A hydraulic drive system for driving an apparatus (6), with a drive unit (10) which can drive the apparatus (6) via a primary hydraulic circuit comprising a first hydraulic displacement machine (1) and a second hydraulic displacement machine (2), and with a third hydraulic displacement machine (3) which is connectable or connected with the apparatus (6) for transmitting mechanical energy, and a high-pressure accumulator (5) which is hydraulically connected or connectable with the third displacement machine (3), so that via the third hydraulic displacement machine an energy recovery or a support of the drive system can be effected, which is independent of the primary hydraulic circuit, wherein shafts of the second hydraulic displacement machine (2) and the third hydraulic displacement machine (3) are connectable or connected with a drive shaft of the apparatus (6) for transmitting mechanical energy,
**characterized in**
that the high-pressure accumulator (5) can be charged by a hydraulic displacement machine which is connected or connectable with the drive unit (10) for transmitting mechanical energy such that a direct conversion of the mechanical energy supplied by the drive unit into hydraulic energy is effected by the hydraulic displacement machine.

2. The hydraulic drive system according to claim 1, wherein the high-pressure accumulator (5) can be charged by the first hydraulic displacement machine (1).

3. The hydraulic drive system according to claim 1, wherein a fourth hydraulic displacement machine (4) is provided, via which the high-pressure accumulator (5) can be charged.

4. The hydraulic drive system according to any of the preceding claims, wherein the high-pressure accumulator (5) can be charged via the third hydraulic displacement machine (3), in that the same operates as hydraulic pump.

5. The hydraulic drive system according to any of the preceding claims, wherein the hydraulic displacement machine used for charging is connected or connectable with a hydraulic reservoir (9).

6. The hydraulic drive system according to any of the preceding claims, wherein the third hydraulic displacement machine (3) operates as hydraulic motor and can be driven via the high-pressure accumulator (5).

7. The hydraulic drive system according to any of the preceding claims, wherein the first and/or fourth hydraulic displacement machine operates as hydraulic motor and can be driven via the high-pressure accumulator (5).

8. The hydraulic drive system according to any of the preceding claims, wherein the first hydraulic displacement machine (1) also can operate as hydraulic motor and the second hydraulic displacement machine (2) also can operate as hydraulic pump, so that the second hydraulic displacement machine drives the first hydraulic displacement machine.

9. The hydraulic drive system according to any of the preceding claims, wherein the first and the second hydraulic displacement machine form a closed hydraulic circuit.

10. The hydraulic drive system according to claim 1, wherein the shafts of the second and the third hydraulic displacement machine are connected directly or via a transmission (17).

11. The hydraulic drive system according to claim 1, wherein the shafts of the second and/or the third hydraulic displacement machine are connectable with the drive shaft of the apparatus (6) via at least one clutch (55).

12. The hydraulic drive system according to any of the preceding claims, wherein the output shaft of the drive unit (10) is connectable or connected with drive shafts of the first and/or the fourth hydraulic displacement machine for transmitting mechanical energy.

13. The hydraulic drive system according to claim 12, wherein the drive shafts of the first and the fourth hydraulic displacement machine are independently connectable with the drive shaft of the drive unit via at least two clutches (51, 52).

14. The hydraulic drive system according to claim 12 or 13, wherein the drive unit (10) drives the drive shafts of the first and/or the fourth hydraulic displacement machine via a transmission (8).

15. The hydraulic drive system according to any of the preceding claims, wherein at least one further apparatus (63) is driven via the drive unit (10).

16. The hydraulic drive system according to claim 15, wherein the further apparatus (63) is driven via a hydraulic circuit with a hydraulic pump (59) and the hydraulic pump is driven by the drive unit (10).

17. The hydraulic drive system according to claim 15 or 16, wherein the further apparatus (63) or the hydraulic pump (59) driving the further apparatus (63) is connectable with the drive unit (10) via at least one clutch (54) independent of the first and/or the fourth hydraulic displacement machine.

18. The hydraulic drive system according to any of claims 15 to 17, wherein the further apparatus (63) or the hydraulic pump driving the further apparatus (63) is connectable with the first and/or fourth hydraulic displacement machine for transmitting mechanical energy, in particular via at least one clutch.

19. The hydraulic drive system according to any of the preceding claims, wherein the drive unit (10) comprises an internal combustion engine or an electric motor.

20. The hydraulic drive system according to claim 19, wherein the drive unit comprises a single motor or a plurality of motors (10, 110) driving a transmission in parallel.

21. The hydraulic drive system according to any of the preceding claims, wherein the first and/or the second hydraulic displacement machine has an adjustable displacement volume.

22. The hydraulic drive system according to any of the preceding claims, wherein the third and/or the fourth hydraulic displacement machine has an adjustable displacement volume.

23. The hydraulic drive system according to any of the preceding claims, wherein the first and/or the second hydraulic displacement machine has two directions of delivery.

24. The hydraulic drive system according to any of the preceding claims, wherein the third and/or the fourth hydraulic displacement machine has two directions of delivery.

25. The hydraulic drive system according to any of the preceding claims, wherein two apparatuses are provided, whose drive systems each have first, second and third hydraulic displacement machines, wherein the first hydraulic displacement machines (1, 21) are connectable or connected with the drive unit (10) for transmitting mechanical energy,
the second hydraulic displacement machines (2, 22) and the third hydraulic displacement machines (3, 23) each are connectable or connected with the apparatuses for transmitting mechanical energy,
wherein the first hydraulic displacement machines (1, 21) each are hydraulically connected or connectable with the second hydraulic displacement machines (2, 22),
and wherein the high-pressure accumulator (5) is hydraulically connected or connectable with the third hydraulic displacement machines (3, 23).

26. The hydraulic drive system according to claim 25, wherein the high-pressure accumulator (5) can be charged by one or both of the two first hydraulic displacement machines (1, 21).

27. The hydraulic drive system according to claim 25, wherein a fourth hydraulic displacement machine (4) additionally is provided, via which the high-pressure accumulator (5) can be charged.

28. The hydraulic drive system according to any of the preceding claims, comprising a controller for activating the storage and work functions of the system.

29. The hydraulic drive system according to any of the preceding claims for driving a crane.

30. The hydraulic drive system according to claim 29, wherein the apparatus (6) is a winch, in particular a hoisting winch.

31. The hydraulic drive system according to any of claims 1 to 28 for driving a mobile implement, in particular a reachstacker or a wheel loader.

32. The hydraulic drive system according to claim 31, wherein the apparatus (6) is a traveling drive.

33. A crane with a hydraulic drive system according to any of claims 1 to 30.

34. A mobile implement, in particular a reachstacker or wheel loader, with a hydraulic drive system according to any of claims 1 to 28 and 31 and 32.

35. A method for operating a drive system according to any of the preceding claims, wherein the high-pressure accumulator (5) is charged by conversion of the kinetic energy of the apparatus (6) via the third hydraulic displacement machine (3) and/or the high-pressure accumulator (5) is charged via a hydraulic displacement machine which is connected or connectable with the drive unit (10) for transmitting mechanical energy, when the power of the drive unit (10) is not or not completely required for driving the apparatus (6).

36. The method according to claim 35, wherein charging the high-pressure accumulator (5) is effected while the apparatus (6) is not moved.

37. The method according to claim 35 or 36, wherein the apparatus (6) is driven by conversion of the hydraulic energy from the high-pressure accumulator (5) via the third hydraulic displacement machine (3).

38. The method according to any of the preceding claims, wherein mechanical energy is supplied to further loads by conversion of the hydraulic energy from the high-pressure accumulator (5) via the first and/or fourth hydraulic displacement machine.

## Revendications

1. Système d'entraînement hydraulique pour l'entraînement d'un dispositif (6), comportant une unité d'entraînement (10), qui peut entraîner le dispositif (6) par un circuit hydraulique primaire provenant d'une première machine de refoulement hydraulique (1) et d'une seconde machine de refoulement hydraulique (2), ainsi qu'une troisième machine de refoulement hydraulique (3), qui peut être ou est liée au dispositif (6) pour la transmission d'énergie mécanique, et un accumulateur haute pression (5), qui est ou peut être lié de manière hydraulique à la troisième machine de refoulement (3), de telle sorte qu'une récupération énergétique ou une assistance de système d'entraînement peut être effectuée par la machine de refoulement hydraulique, qui est indépendante du circuit hydraulique primaire, des arbres de la seconde (2) et de la troisième machine de refoulement hydraulique (3) étant ou pouvant être liés à un arbre d'entraînement du dispositif (6) pour la transmission d'énergie mécanique,
**caractérisé en ce que** l'accumulateur haute pression (5) peut être chargé par une machine de refoulement hydraulique, qui est ou peut être liée à l'unité d'entraînement (10) pour la transmission d'énergie mécanique de telle manière qu'une transformation directe de l'énergie mécanique fournie par l'unité d'entraînement en énergie hydraulique est effectuée par la machine de refoulement hydraulique.

2. Système d'entraînement hydraulique selon la revendication 1, dans lequel l'accumulateur haute pression (5) peut être chargé par la première machine de refoulement hydraulique (1).

3. Système d'entraînement hydraulique selon la revendication 1, dans lequel une quatrième machine de refoulement hydraulique (4) est prévue, par laquelle l'accumulateur haute pression (5) peut être chargé.

4. Système d'entraînement hydraulique selon l'une des revendications précédentes, dans lequel l'accumulateur haute pression (5) peut être chargé par la troisième machine de refoulement hydraulique (3), celle-ci fonctionnant en tant que pompe hydraulique.

5. Système d'entraînement hydraulique selon l'une des revendications précédentes, dans lequel la machine de refoulement hydraulique utilisée pour la charge est ou peut être liée à un réservoir hydraulique (9).

6. Système d'entraînement hydraulique selon l'une des revendications précédentes, dans lequel la troisième machine de refoulement hydraulique (3) peut fonctionner en tant que moteur hydraulique et peut être entraînée par l'accumulateur haute pression (5).

7. Système d'entraînement hydraulique selon l'une des revendications précédentes, dans lequel la première et/ou la quatrième machine de refoulement hydraulique peut fonctionner en tant que moteur hydraulique et peut être entraînée par l'accumulateur haute pression (5).

8. Système d'entraînement hydraulique selon l'une des revendications précédentes, dans lequel la première machine de refoulement hydraulique (1) peut fonctionner également en tant que moteur hydraulique et la seconde machine de refoulement hydraulique (2) peut fonctionner également en tant que pompe hydraulique, de telle sorte que la seconde machine de refoulement entraîne la première machine de refoulement hydraulique.

9. Système d'entraînement hydraulique selon l'une des revendications précédentes, dans lequel la première et la seconde machine de refoulement hydraulique forment un circuit hydraulique fermé.

10. Système d'entraînement hydraulique selon la revendication 1, dans lequel les arbres de la seconde ou de la troisième machine de refoulement hydraulique sont liés directement ou par un engrenage (17).

11. Système d'entraînement hydraulique selon la revendication 1, dans lequel les arbres de la seconde et/ou de la troisième machine de refoulement hydraulique sont liés à l'arbre d'entraînement du dispositif (6) par au moins un accouplement (55).

12. Système d'entraînement hydraulique selon l'une des revendications précédentes, dans lequel l'arbre d'entraînement de l'unité d'entraînement (10) peut être ou est lié à des arbres d'entraînement de la première et/ou de la quatrième machine de refoulement hydraulique pour la transmission d'énergie mécanique.

13. Système d'entraînement hydraulique selon la revendication 12, dans lequel les arbres d'entraînement de la première et de la quatrième machine de refoulement hydraulique peuvent être liés par au moins deux accouplements (51, 52) indépendamment l'une de l'autre à l'arbre d'entraînement de l'unité d'entraînement.

14. Système d'entraînement hydraulique selon la revendication 12 ou 13, dans lequel l'unité d'entraînement (10) entraîne les arbres d'entraînement de la première et/ou de la quatrième machine de refoulement hydraulique par un engrenage (8).

15. Système d'entraînement hydraulique selon l'une des revendications précédentes, dans lequel au moins un dispositif (63) supplémentaire est entraîné par l'unité d'entraînement (10).

16. Système d'entraînement hydraulique selon la revendication 15, dans lequel le dispositif (63) supplémentaire est entraîné par un circuit hydraulique avec une pompe hydraulique (59) et la pompe hydraulique est entraînée par l'unité d'entraînement (10).

17. Système d'entraînement hydraulique selon la revendication 15 ou 16, dans lequel le dispositif (63) supplémentaire ou la pompe hydraulique (59) entraînant le dispositif (63) supplémentaire peut être lié(e) à l'unité d'entraînement (10) indépendamment de la première et/ou de la quatrième machine de refoulement hydraulique par au moins un accouplement (54).

18. Système d'entraînement hydraulique selon l'une des revendications 15 à 17, dans lequel le dispositif (63) supplémentaire ou la pompe hydraulique entraînant le dispositif (63) supplémentaire peut être lié(e) à la première et/ou à la quatrième machine de refoulement hydraulique pour la transmission d'énergie mécanique, en particulier par au moins un accouplement.

19. Système d'entraînement hydraulique selon l'une des revendications précédentes, dans lequel l'unité d'entraînement (10) comprend un moteur à combustion ou un moteur électrique.

20. Système d'entraînement hydraulique selon la revendication 19, dans lequel l'unité d'entraînement comprend un seul moteur ou plusieurs moteurs (10, 110) entraînant en engrenage en parallèle.

21. Système d'entraînement hydraulique selon l'une des revendications précédentes, dans lequel la première et/ou la seconde machine de refoulement hydraulique présente(nt) un volume de refoulement réglable.

22. Système d'entraînement hydraulique selon l'une des revendications précédentes, dans lequel la troisième et/ou la quatrième machine de refoulement hydraulique présente(nt) un volume de refoulement réglable.

23. Système d'entraînement hydraulique selon l'une des revendications précédentes, dans lequel la première et/ou la seconde machine de refoulement hydraulique présente(nt) deux directions de transport.

24. Système d'entraînement hydraulique selon l'une des revendications précédentes, dans lequel la troisième et/ou la quatrième machine de refoulement hydraulique présente(nt) deux directions de transport.

25. Système d'entraînement hydraulique selon l'une des revendications précédentes, dans lequel deux dispositifs sont prévus, dont les systèmes d'entraînement disposent respectivement d'une première, seconde et troisième machine de refoulement hydraulique, les premières machines de refoulement hydrauliques (1, 21) étant ou pouvant être liées à l'unité d'entraînement (10) pour la transmission d'énergie mécanique,
les secondes machines de refoulement hydrauliques (2, 22) et troisièmes machines de refoulement hydrauliques (3, 23) étant ou pouvant être respectivement liées aux dispositifs pour la transmission d'énergie mécanique, dans lequel les premières machines de refoulement hydrauliques (1, 21) sont ou peuvent être respectivement liées aux secondes machines de refoulement hydrauliques (2, 22),
et dans lequel l'accumulateur haute pression (5) est ou peut être lié de manière hydraulique aux troisièmes machines de refoulement hydraulique (3, 23).

26. Système d'entraînement hydraulique selon la revendication 25, dans lequel l'accumulateur haute pression (5) peut être chargé par une ou les deux des machines de refoulement hydraulique (1, 21).

27. Système d'entraînement hydraulique selon la revendication 25, dans lequel une quatrième machine de refoulement hydraulique (4) est prévue en plus, par laquelle l'accumulateur haute pression (5) peut être chargé.

28. Système d'entraînement hydraulique selon l'une des revendications précédentes comportant une commande pour l'amorçage des fonctions d'accumulation et de travail du système.

29. Système d'entraînement hydraulique selon l'une des revendications précédentes pour l'entraînement d'une grue.

30. Système d'entraînement hydraulique selon la revendication 29, dans lequel le dispositif (6) est un treuil, en particulier un treuil de levage.

31. Système d'entraînement hydraulique selon l'une des revendications 1 à 28 pour l'entraînement d'un appareil de travail mobile, en particulier d'un reachstacker ou d'un chargeur sur roues.

32. Système d'entraînement hydraulique selon la revendication 31, dans lequel le dispositif (6) est un organe de translation.

33. Grue avec un système d'entraînement hydraulique selon l'une des revendications 1 à 30.

34. Appareil de travail mobile, en particulier reachstacker ou chargeur sur roues, comportant un système d'entraînement hydraulique selon l'une des revendications 1 à 28 et 31 et 32.

35. Procédé de fonctionnement d'un système d'entraînement selon l'une des revendications précédentes, dans lequel l'accumulateur haute pression (5) est chargé par la transformation de l'énergie cinétique du dispositif (6) par la troisième machine de refoulement hydraulique (3) et/ou l'accumulateur haute pression (5) est chargé par une machine de refoulement hydraulique, qui est ou peut être liée à l'unité d'entraînement (10) pour la transmission d'énergie mécanique lorsque la puissance de l'unité d'entraînement (10) n'est pas nécessaire ou pas entièrement nécessaire pour l'entraînement du dispositif (6).

36. Procédé selon la revendication 35, dans lequel la charge de l'accumulateur haute pression (5) est effectuée au moment où le dispositif (6) n'est pas en déplacement.

37. Procédé selon la revendication 35 ou 36, dans lequel le dispositif (6) est entraîné par la transformation de l'énergie hydraulique depuis l'accumulateur haute pression (5) par la troisième machine de refoulement hydraulique (3).

38. Procédé selon une des revendications précédentes, dans lequel une énergie mécanique est cédée à d'autres consommateurs par la transformation de l'énergie hydraulique depuis l'accumulateur haute pression (5) par la première et/ou de la quatrième machine de refoulement hydraulique.
